# EUROPÄISCHE PATENTSCHRIFT

(11) **EP 3 482 449 B1**
(45) Veröffentlichungstag und Bekanntmachung des Hinweises auf die Patenterteilung: **24.02.2021**
(21) Anmeldenummer: 17745994.8
(22) Anmeldetag: 06.07.2017
(51) Int. Cl.: H01Q 1/12, H01Q 1/24, H04B 1/38, H01Q 1/02, H04B 1/3888

(54) **MOBILFUNKANTENNE ZUR BEFESTIGUNG AN EINEM MAST- ODER WANDFÖRMIGEN TRÄGER MIT ZUMINDEST ZWEI AUSTAUSCHBAREN VERSTÄRKERMODULEN**
MOBILE COMMUNICATIONS ANTENNA FOR MOUNTING ON A MAST OR WALL-LIKE SUPPORT WITH AT LEAST TWO INTERCHANGEABLE AMPLIFIER MODULES
ANTENNE RADIO MOBILE DESTINÉE À ÊTRE FIXÉE À UN SUPPORT EN FORME DE MÂT OU DE PAROI ET COMPRENANT AU MOINS DEUX MODULES AMPLIFICATEURS REMPLAÇABLES

(30) Priorität: 11.07.2016 DE 102016112701
(43) Veröffentlichungstag der Anmeldung: 15.05.2019
(73) Patentinhaber: TELEFONAKTIEBOLAGET LM ERICSSON (PUBL), 164 83 Stockholm (SE)
(72) Erfinder: FRITZE, Stefan, 83026 Rosenheim (DE); GABRIEL, Roland, 83556 Griesstätt (DE); GÖTTL, Maximilian, 83112 Frasdorf (DE); OBERMAYER, Maximilian, 83022 Rosenheim (DE); WEBER, Stefan, 83139 Söchtenau (DE)
(74) Vertreter: Flach Bauer Stahl Patentanwälte Partnerschaft mbB
(86) Internationale Anmeldenummer: PCT/EP2017/067030
(87) Internationale Veröffentlichungsnummer: WO 2018/011065

(56) Entgegenhaltungen:
- WO-A1-2015/072727
- WO-A1-2015/105351
- WO-A1-2015/126106
- WO-A1-2016/054392
- WO-A1-2016/060305
- CN-U- 201 466 222

## Beschreibung

Die Erfindung betrifft eine (semi-) aktive Mobilfunkantenne für einen mast- oder wandförmigen Träger mit austauschbaren Verstärkermodulen.

Eine aktive Mobilfunkantenne besteht aus einer Antenne und einem oder mehreren Remote Radio Heads (RRH), welche an der Antenne montiert sein können (semi-aktive Antenne) oder in die Antenne integriert bzw. fest verbunden sind (aktive Antenne). Als Remote Radio Head wird die außentaugliche, allwetterfeste Montage von Spannungsversorgung, Sende- und Empfangsbaugruppe (Transceiver), Endverstärker und Duplexfilter an den Antennenmast bezeichnet. Die Kommunikation mit einer Basisstation erfolgt dabei meistens über eine digitale Schnittstelle, wie eine Glasfaserverbindung. Die Mobilfunkantenne, welche in der Kombination mit den Remote Radio Heads auch als (semi-) aktive Antenne bezeichnet werden kann, umfasst mehrere Strahler oder Strahlerpaare, die mit einer Radioeinheit (Verstärkereinheit) bestückt sind, bzw. von einer solchen versorgt werden. Bei Mobilfunkantennen hat man durch den geringen Wirkungsgrad der Verstärker und den sehr aufwendigen Signalverarbeitungsprozess im Digitalteil erhebliche Verlustleistungen. Der erzielbare Wirkungsgrad bei derartigen Mobilfunkantennen liegt bei ungefähr 20 % bis 30 %. Dies bedeutet, dass 70 % - 80% der hinzugeführten elektrischen Leistung bevorzugt als Wärme wieder abgeführt werden muss. Dies führt dazu, dass ein hoher Kühlaufwand betrieben werden muss, was das Gewicht und die Kosten erhöht. Erschwerend kommt hinzu, dass die Umgebungstemperaturen, bei denen die Mobilfunkantennen eingesetzt werden, von -40°C bis +55°C reichen können. Entsprechend müssen Bauteile (z.B. FPGAs) für die digitale Signalverarbeitung und Leistungsverstärker (Chips) für diese Temperaturbereiche dimensioniert werden. Heutzutage werden die aktiven Mobilfunkantennen sehr kompakt gebaut und alle Funktionseinheiten, wie Leistungsverstärker (PA; engl. Power Amplifier), Prozessoreinheiten (TRX-Board), Filter, A/D- bzw. D/A-Wandler werden daher auf engstem Raum angeordnet.

Bei Ausfall eines dieser Bauelemente müssen alle Funktionseinheiten oder die gesamten Mobilfunkantenne getauscht werden. Ein solcher Tausch setzt voraus, dass die Mobilfunkantenne vollständig abgeschaltet werden muss. Häufig ist außerdem ein Weiterbetrieb, mit den noch funktionierenden Funktionseinheiten nicht möglich.

Die Funktionseinheiten sind auch derart an oder in der Mobilfunkantenne angeordnet, dass diese insgesamt abgehängt werden muss und die Funktionseinheiten vorzugsweise am Boden getauscht werden. Im Anschluss daran wird die Mobilfunkantenne wieder aufgehängt. Da die Mobilfunkantennen ein hohes Gewicht aufweisen, sind hierzu häufig entsprechende Kraneinrichtungen notwendig, die insbesondere in unzugänglichen Bereichen schwer eingesetzt werden können.

Aus der DE 10 2012 011 092 A1 ist ein Halterungssystem für eine Mobilfunkantenne bekannt, das es erlaubt, dass eine Mobilfunkkomponente, die beabstandet von der Mobilfunkantenne, im Abstandsraum zwischen der Mobilfunkantenne und dem Mast angeordnet ist, getauscht werden kann, ohne dass dabei die Mobilfunkantenne abgehängt werden muss.

Nachteilig an der DE 10 2012 011 892 A1 ist der komplexe Aufbau und der erhöhte Verkabelungsaufwand, sowie die Tatsache, dass bei einem Defekt einer einzelnen Funktionseinheit dennoch die aktiven Komponenten einer ganzen Mobilfunkantenne getauscht werden müssen.

Es ist daher die Aufgabe der hier vorliegenden Erfindung eine Mobilfunkantenne zu schaffen, die kompakt aufgebaut ist, sehr gute elektrische Eigenschaften, insbesondere eine sehr hohe Zuverlässigkeit aufweist und deren Funktionseinheiten im Fehlerfall leicht getauscht werden können.

Die Aufgabe wird durch die erfindungsgemäße Mobilfunkantenne mit austauschbaren Verstärkermodulen gemäß dem unabhängigen Anspruch 1 gelöst. In den Unteransprüchen finden sich vorteilhafte Weiterbildungen der erfindungsgemäßen Mobilfunkantenne wieder.
Die erfindungsgemäße Mobilfunkantenne mit austauschbaren Verstärkermodulen dient zur Befestigung an einem mast- oder wandförmigen Träger. Sie umfasst zumindest ein Antennengehäuse mit einer Gehäusevorderseite, die durchlässig für elektromagnetische Strahlung ist, einer Gehäuserückseite und einer ersten und einer dazu gegenüberliegenden zweiten seitlichen Gehäuseseite, die zusammen eine umlaufende Gehäusewand bilden. Das Antennengehäuse erstreckt sich dabei entlang einer Längsachse. In dem Antennengehäuse sind mehrere Strahler oder Strahlerpaare vor zumindest einem Reflektor beabstandet angeordnet. Die Mobilfunkantenne umfasst außerdem zumindest eine Signalaufbereitungs- und/Steuereinheit. Sie umfasst weiterhin zumindest zwei Verstärkermodule mit einem ersten Anschlussport und einem zweiten Anschlussport. Die Verstärkermodule sind an der Gehäuserückseite und/oder an der ersten oder zweiten seitlichen Gehäuseseite außerhalb des Antennengehäuses an diesem befestigt oder montiert. Die zumindest eine Signalaufbereitungs- und/oder Steuereinheit ist in einem von den Verstärkermodulen separierten Gehäuse in oder an dem Antennengehäuse der Mobilfunkantenne untergebracht. Die zumindest eine Signalaufbereitungs- und/oder Steuereinheit umfasst zumindest eine digitale Schnittstelle zu einer Basisbandeinheit oder zum Mobilfunknetz und Schnittstellen zu den separaten Verstärkermodulen. Der erste Anschlussport und der zweite Anschlussport der beiden Verstärkermodule sind über zugeordnete Anschlussöffnungen im Antennengehäuse mit der jeweiligen ersten und zweiten Anschlusskontakteinrichtung durch eine gewinde- und/oder schraubverbindungsfreie Steckverbindung verbunden.

Besonders vorteilhaft an der erfindungsgemäßen Mobilfunkantenne ist, dass sich die (Sende-) Verstärker in von der Signalaufbereitungs- und/oder Steuereinheit abgesetzten, separaten und austauschbaren Verstärkermodulen befinden, welche hinter der Antenne oder seitlich neben der Antenne angeordnet sind. Die Verstärkermodule umfassen in dieser Ausführung vorzugsweise die Sendeverstärker, die Vorstufen der Verstärker und eine Rückführung eines Signalweges von Ausgang des Verstärkers zur Linearisierung desselben sowie die Sende-Ausgangsfilter. In dieser Ausführung werden für die Sendefunktion und Empfangsfunktion jeweils getrennte Strahlerelemente verwendet. Die Empfangsverstärker und das Signalboard zur Linearisierung sind vorzugsweise direkt in dem Antennengehäuse angeordnet. Ein weiterer Vorteil besteht darin, dass durch Einsatz einer Steckverbindung auf den Einsatz eines Gewindes und ggf. entsprechende Überwurfmuttern verzichtet werden kann. Eine Steckverbindung wird insbesondere als schraubverbindungsfrei angesehen. Dadurch können die Verstärkermodule auch in großer Höhe werkzeugfrei durch einen Monteur sicher und lediglich durch Herausziehen und Hineinstecken getauscht werden. Weiterhin ist es besonders vorteilhaft, dass die Verstärkermodule außerhalb des Antennengehäuses der Mobilfunkantenne angeordnet sind. Dadurch können diese effizienter gekühlt werden, weil das Antennengehäuse vorzugsweise vollständig geschlossen und gegenüber weiteren Umwelteinflüssen abgedichtet ist. Ein weiterer Vorteil besteht darin, dass die zumindest eine Signalaufbereitungs- und/oder Steuereinheit und die Verstärkermodule in getrennten Gehäusen untergebracht sind. Bei Ausfall eines Verstärkermoduls müssen nicht die weiteren Funktionseinheiten, die in der zumindest einen Signalaufbereitungs- und/oder Steuereinheit integriert sind, mitgetauscht werden. Es müssen auch nicht die anderen Verstärkermodule getauscht werden, weil vorzugsweise ebenfalls jedes Verstärkermodul in einem eigenen Gehäuse untergebracht ist, welches räumlich von den anderen Gehäusen getrennt ist.

In einer erfindungsgemäßen Weiterbildung verläuft in Draufsicht auf einen Querschnitt durch das Antennengehäuse die erste und/oder die zweite seitliche Gehäuseseite in zumindest einem Teilbereich von der Gehäusevorderseite zur Gehäuserückseite mit einer Komponente (Richtungsvektor) in Richtung der gegenüberliegenden seitlichen Gehäuseseite, wodurch die Gehäuserückseite eine kleinere Breite aufweist als die Gehäusevorderseite. Die Verstärkermodule sind an der ersten seitlichen Gehäuseseite und/oder an der zweiten seitlichen Gehäuseseite außerhalb des Antennengehäuses befestigt und/oder montiert. Dabei ist jedes Verstärkermodul entweder an der ersten seitlichen Gehäuseseite und optional an der Gehäuserückseite oder an der zweiten seitlichen Gehäuseseite und optional der Gehäuserückseite angeordnet bzw. montiert. Hierzu weist die erste und/oder zweite seitliche Gehäuseseite an zwei unterschiedlichen Seitenwandabschnitten zumindest zwei Anschlussöffnungen auf, denen jeweils erste und zweie Anschlusskontakteinrichtungen zugeordnet sind.

Besonders vorteilhaft ist hier, dass sich das Antennengehäuse im Querschnitt von der Gehäusevorderseite hin zur Gehäuserückseite verjüngt und dass zumindest eines der (oder alle) Verstärkermodule mit seinen beiden Anschlussports über zwei Anschlussöffnungen in verschiedenen Seitenwandabschnitten angeschlossen und befestigt ist. Dadurch kann eine sehr kompakte Mobilfunkantenne geschaffen werden. Dadurch, dass die beiden Anschlussports an verschiedenen, voneinander abgesetzten Seitenwandabschnitten angreifen, erfolgt eine verbesserte Entkopplung der jeweiligen Signale, was zur Unterdrückung von Schwingungen des Verstärkermoduls führt, die bei hoher Verstärkung notwendig ist.

In einer erfindungsgemäßen Weiterbildung sind in Draufsicht auf einen Querschnitt durch das Antennengehäuse die erste und die zweite seitlichen Gehäuseseiten stufenförmig bzw. zickzackförmig ausgebildet und umfassen jeweils n Seitensegmente mit n ≥ 2 oder n ≥ 3 oder n ≥ 4. Die Seitensegmente können auch als Seitenwandabschnitte bezeichnet werden. Das erste Seitensegment der ersten und zweiten seitlichen Gehäuseseite schließt sich an der Gehäusevorderseite an und das n-te Seitensegment, also das letzte Seitensegment der ersten und der zweiten seitlichen Gehäuseseite, schließt sich an die Gehäuserückseite an. Ein Abstand zwischen den jeweiligen Seitensegmenten der ersten und zweiten seitlichen Gehäuseseite verringert sich vorzugsweise sukzessive vom ersten Seitensegment hin zum n-ten Seitensegment. Die erste und/oder zweite seitliche Gehäuseseite weist an zwei unterschiedlichen Seitensegmenten für das zumindest eine Verstärkermodul die zumindest beiden Anschlussöffnungen mit den zugeordneten ersten und zweiten Anschlusskontakteinrichtungen auf. Der stufenförmige Aufbau des Antennengehäuses erleichtert weiter die Anbringung der Verstärkermodule.

In einer erfindungsgemäßen Weiterbildung erstrecken sich der ersten Anschlussport und der zweite Anschlussport von zumindest einem Verstärkerelement durch die Anschlussöffnungen, die in unterschiedlichen Seitensegmenten der ersten oder zweiten seitlichen Gehäuseseite ausgebildet sind, in das Antennengehäuse hinein und sind innerhalb des Antennengehäuses mit den entsprechenden ersten und zweiten Anschlusskontakteinrichtungen durch die Steckverbindung verbunden. In diesem Fall könnten der erste Anschlussport und der zweite Anschlussport auch eine Dichteinrichtung aufweisen, um sicherzustellen, dass Umwelteinflüsse wie Regen oder Schnee keine Auswirkungen auf das Innere des Antennengehäuses haben. Alternativ dazu wäre es auch möglich, dass sich die ersten und zweiten Anschlusskontakteinrichtungen durch die Anschlussöffnungen in den unterschiedlichen Seitensegmenten der ersten oder zweiten seitlichen Gehäuseseite von innerhalb des Antennengehäuses nach außerhalb des Antennengehäuses erstrecken. Die Verbindung mit den jeweiligen Anschlussports würde dann außerhalb des Antennengehäuses stattfinden. In diesem Fall würden vorzugsweise die Anschlusskontakteinrichtungen die Dichteinrichtung beinhalten. Zumindest eines der Verstärkermodule wäre dabei über einen ersten Anschlussport unmittelbar oder mittelbar über die erste Anschlusskontakteinrichtung mit der zumindest einen Signalaufbereitungs- und/oder Steuereinheit zur Signalübertragung verbunden. Über den zweiten Anschlussport wäre es unmittelbar oder mittelbar über die zweite Anschlusskontakteinrichtung mit einem Strahler bzw. Strahlerpaar zur Signalübertragung verbunden. Vorzugsweise findet eine mittelbare Verbindung zu den Strahlern bzw. Strahlerpaaren statt, weil noch weitere Einrichtungen wie z.B. Phasenschieber dazwischengeschaltet sind.

In diesem Zusammenhang umfasst die Mobilfunkantenne vorzugsweise mehrere Phasenschieber, über die das Verstärkermodul mittelbar mit den Strahlern bzw. Strahlerpaaren zur Signalübertragung verbunden ist. Um die Phasenschieber sicher innerhalb des Antennengehäuses anzuordnen, bzw. zu montieren umfasst die Mobilfunkantenne in einem anderen Ausführungsbeispiel eine innere Gehäuseeinrichtung, die innerhalb des Antennengehäuses angeordnet ist. Die innere Gehäuseeinrichtung ist an einer Rückseite des zumindest einen Reflektors angeordnet und bildet zusammen mit ihren beiden, sich gegenüberliegenden Seitenflächen, ihre Rückwand und der Rückseite des Reflektors einen Aufnahmeraum. In diesem Aufnahmeraum können die Phasenschieber angeordnet sein. Diese wären dann vorzugsweise an entsprechenden Halte- und/oder Abstützelemente befestigt, die ihrerseits wiederum vorzugsweise an der inneren Gehäuseeinrichtung befestigt sind.

Zur Befestigung der Anschlusskontakteinrichtungen sind in den Seitenwänden der inneren Gehäuseeinrichtung Befestigungsöffnungen eingebracht, die sich vorzugsweise ebenfalls gegenüberliegen, wobei in diesen Befestigungsöffnungen die zweiten Anschlusskontakteinrichtungen angeordnet bzw. befestigt sind.

Um die ersten Anschlusskontakteinrichtungen zu befestigen, sind an der Rückwand der inneren Gehäuseeinrichtung Befestigungsfahnen ausgebildet, die sich in Richtung der Gehäuserückseite des Antennengehäuses erstrecken. Ein Abstand zwischen zwei sich in etwa gegenüberliegenden Befestigungsfahnen ist dabei kleiner als ein Abstand der beiden Seitenwände der inneren Gehäuseeinrichtungen, weil sich die Befestigungsfahnen näher an der Gehäuserückseite befinden als die Seitenwände der inneren Gehäuseeinrichtung und sich das Antennengehäuse in Richtung der Gehäuserückseite. Diese Befestigungsfahnen, die vorzugsweise aus der Rückwand der inneren Gehäuseeinrichtung ausgestanzt werden, sind vorzugsweise weiterhin mit einem Ende mit der Rückwand verbunden (welches eine Biegekante bildet) und durch einen Biegeprozess in Richtung der Gehäuserückseite des Antennengehäuses gebogen. Diese Befestigungsfahnen umfassen weitere Befestigungsöffnungen, in welchen die zumindest ersten Anschlusskontakteinrichtungen angeordnet bzw. befestigt sind.

In einer anderen Ausführungsform der Erfindung bildet zumindest eines der Verstärkermodule insbesondere den Sendeverstärker, der Mobilfunkfunksignale verstärkt, die über die Strahler bzw. Strahlerpaare ausgesendet werden sollen. Dieser Sendeverstärker muss leistungsstärker ausgelegt sein als etwaige Empfangsverstärker, wodurch mehr Wärme anfällt, die abgeführt werden muss. Grundsätzlich wäre es allerdings auch möglich, dass zumindest ein Verstärkermodul einen Empfangsverstärker mit beinhaltet, der Mobilfunksignale verstärkt, die über die Strahler bzw. Strahlerpaare empfangen werden. Dieser zumindest eine Empfangsverstärker ist allerdings vorzugsweise in der Signalaufbereitungs- und/oder Steuereinheit zur Verstärkung der über die Strahler bzw. Strahlerpaare empfangenen Mobilfunksignale integriert. Bei diesem zumindest einen Empfangsverstärker handelt es sich vorzugsweise um einen Low Noise Amplifier (LNA). Es können natürlich auch mehrere Verstärkermodule eingesetzt werden, die entweder ausschließlich Sendeverstärker beinhalten. Es können auch gemischte Kombinationen eingesetzt werden, also ein erstes Verstärkermodul umfasst einen Sendeverstärker, wohingegen ein anderes bzw. weiteres Verstärkermodul einen Empfangsverstärker beinhaltet.

Um eine leichte Austauschbarkeit zu gewährleisten, ohne dass der Mast bzw. der wandförmige Träger den Austausch beeinträchtigt, ist zumindest ein, vorzugsweise mehrere oder alle Verstärkermodul mit Blick auf die erste und/oder zweite seitliche Gehäuseseite auf das Antennengehäuse aufsteckbar. In diesem Zusammenhang ist der erste oder der zweite Anschlussport des Verstärkermoduls in Einsteckrichtung fortlaufend gegenüber dem zweiten bzw. ersten Anschlussport angeordnet. Dies bedeutet, dass in Einsteckrichtung ein Anschlussport gegenüber dem anderen Anschlussport vorsteht, wobei das Wort "vorstehen" bezogen auf die Bewegungsrichtung zum Ein- bzw. Ausstecken zu verstehen ist.

Um eine verbesserte Entkopplung der einzelnen Anschlussports von zumindest einem Verstärkermodul zu erreichen, können diese beispielsweise unterschiedlich weit von der Gehäusevorderseite beabstandet angeordnet sein. Vorzugsweise sind sie allerdings insbesondere in Richtung der Längsachse versetzt zueinander angeordnet.

In einer weiteren Ausführungsform der Erfindung umfasst zumindest ein Verstärkermodul neben einem Verstärkergehäuse vorzugsweise ein Filtergehäuse. In dem Verstärkergehäuse ist ein Leistungsverstärker und in dem Filtergehäuse ein Hochfrequenzfilter, insbesondere ein solches in Cavity-Bauweise, angeordnet. Über eine Signalleitung sind das Filtergehäuse und das Verstärkergehäuse miteinander zur Signalübertragung verbunden. Das Hochfrequenzfilter umfasst dabei mehrere Resonatorkammern, die einen ResonatorInnenleiter aufweisen. Die Resonator-Innenleiter sind galvanisch mit dem Resonatorboden verbunden und erstrecken sich in Richtung des Gehäusedeckels. Sie enden allerdings beabstandet von dem Gehäusedeckel bzw. sie sind galvanisch von diesem getrennt. Über die Signalleitung kann eine kapazitive bzw. induktive oder gar galvanische Kopplung zu einem Resonatorinnenleiter eines ersten Resonators in dem Hochfrequenzfilter hergestellt werden.

Das Verstärkergehäuse und das Filtergehäuse von zumindest einem Verstärkermodul bestehen aus oder umfassen Metall bzw. eine Metalllegierung wie Aluminium. Das Verstärkergehäuse und das Filtergehäuse können aus einem gemeinsamen Fräs- und/oder Gussteil bestehen. In diesem Fall wären sie einteilig hergestellt. Vorzugsweise bestehen das Verstärkergehäuse und das Filtergehäuse allerdings aus separat gebildeten Fräs- und/oder Gussteilen, die über eine mechanische Verbindung, wie beispielsweise eine Schraubverbindung, fest miteinander verbunden sind. Dabei sind der erste Anschlussport vorzugsweise am Verstärkergehäuse und der zweite Anschlussport vorzugsweise am Filtergehäuse angeordnet. Der zweite Anschlussport ist mit einer Resonatorkammer bzw. einem Resonatorinnenleiter des Filtergehäuses entweder kapazitiv oder induktiv oder galvanisch gekoppelt. Besonders vorteilhaft ist, dass das Verstärkergehäuse und das Filtergehäuse fest miteinander verbunden sind, bzw. einteilig hergestellt sind. Dadurch dient das Filtergehäuse gleichzeitig als Wärmesenke für die in dem Verstärkergehäuse entstehende Wärme. Dadurch vergrößert sich die zur Kühlung des Verstärkergehäuses zur Verfügung stehende Oberfläche.

Das Verstärkermodul ist vorzugsweise derart aufgebaut, das mit seiner Gehäuseform zu dem stufenförmigen Verlauf der ersten oder zweiten seitlichen Gehäuseseite des Antennengehäuses korrespondiert. Das Verstärkergehäuse ist mit seiner längeren Seite senkrecht oder mit einer Komponente überwiegend senkrecht zur Längsachse ausgerichtet, wohingegen das Filtergehäuse mit seiner längeren Seite parallel oder mit einer Komponente überwiegend parallel zur Längsachse ausgerichtet ist. Dies bedeutet, dass die Verstärkermodule in Seitenansicht, also beispielsweise mit Blick auf die Gehäuserückseite des Antennengehäuses L-förmig aufgebaut sind. Zumindest eines der Verstärkermodule kann dabei mit einem Bewegungsvektor, der ausschließlich senkrecht bzw. mit einer Komponente überwiegend senkrecht zur ersten oder zweiten seitlichen Gehäuseseite verläuft und/oder der parallel oder mit einer Komponente überwiegend parallel zur Reflektorebene verläuft, auf das Antennengehäuse aufgesteckt oder von diesem abgezogen werden. Dies bedeutet, dass das Verstärkermodul seitlich auf das Antennengehäuse aufgesteckt oder von diesem abgezogen werden kann. Das Antennengehäuse kann daher ganz nahe am Mast bzw. wandförmigen Träger angeordnet sein.

In Draufsicht auf die Gehäusevorderseite des Antennengehäuses ist zumindest ein Verstärkermodul im montierten Zustand überwiegend oder vorzugsweise vollständig durch die Gehäusevorderseite verdeckt. Dadurch wird der ästhetische Gesamteindruck der Mobilfunkantenne nicht beeinträchtigt.

Um sicherzustellen, dass das Verstärkermodul dauerhaft mit dem Antennengehäuse verbunden ist bzw. bleibt, umfasst das Verstärkermodul in einer weiteren erfindungsgemäßen Ausführungsform vorzugsweise noch eine Arretiereinrichtung, die an dem Verstärkermodul befestigt ist. Die Arretiereinrichtung greift im montierten Zustand des Verstärkermoduls in einer Arretieröffnung ein, die sich in der ersten oder zweiten seitlichen Gehäuseseite befindet und verhindert durch dieses Eingreifen, dass das zumindest eine Verstärkermodul ohne Betätigung der Arretiereinrichtung abziehbar ist.

Um die Kühlung zu verbessern umfasst zumindest ein Verstärkermodul Kühlrippen, die vorzugsweise an denjenigen Gehäuseflächen des Verstärkermoduls angebracht sind, die parallel zur Gehäusevorderseite bzw. Gehäuserückseite des Antennengehäuses verlaufen. Die Kühlrippen verlaufen parallel oder mit einer Komponente überwiegend parallel zur Längsachse, was wiederum bedeutet, dass zwischen den Kühlrippen Luftspalte gebildet sind, die ebenfalls parallel oder mit einer Komponente überwiegend parallel zur Längsachse verlaufen. Dadurch ist sichergestellt, dass sich im montierten Zustand der Mobilfunkantenne ein Luftstrom entlang der Kühlrippen ausbilden kann, der vom Boden der Mobilfunkantenne, also einer Unterseite (bodennahe bzw. untere Stirnseite) der Mobilfunkantenne in Richtung einer Oberseite (obere Stirnseite) der Mobilfunkantenne strömt. Für den Fall, dass mehrere Verstärkermodule an der Mobilfunkantenne angebracht sind, sind diese vorzugsweise entlang der Längsachse voneinander beabstandet an der ersten seitlichen Gehäuseseite und/oder an der zweiten seitlichen Gehäuseseite angebracht. Ein Luftstrom zieht dann entlang sämtliche Kühlrippen aller Verstärkermodule auf der ersten und/oder aller Verstärkermodule auf der zweiten seitlichen Gehäuseseite. In diesem Fall wären die Verstärkermodule zweireihig entlang der Längsachse angeordnet. Die Kühlung kann durch Einsatz von aktiven Kühlkomponenten, wie beispielsweise Lüfter, die temperaturabhängig steuerbar sind, verbessert werden.

In einem anderen erfindungsgemäßen Ausführungsbeispiel umfasst zumindest ein Verstärkermodul vorzugsweise noch ein Anzeigeelement, insbesondere in Form einer LED. Das Anzeigeelement ist von außerhalb des Antennengehäuses sichtbar. Das Verstärkermodul oder die zumindest eine Signalaufbereitungs- und/oder Steuereinheit ist dazu ausgebildet, das Anzeigeelement derart anzusteuern, dass dieses einen Defekt des zumindest einen Verstärkermoduls visuell signalisiert. Die Ansteuerung kann dabei derart erfolgen, dass für den Fall, dass das zumindest eine Verstärkermodul defekt ist, die LED an- bzw. ausgeschaltet wird oder bei Einsatz mehrere LEDs eine LED mit einer anderen Farbe aktiviert wird. Dadurch ist für den Monteur auf dem Mast leicht festzustellen, welches Verstärkermodul er tauschen muss. Nach dem Tausch des Verstärkermoduls, bei welchem die Mobilfunkantenne vorzugsweise nicht ausgeschaltet werden muss, kann er gleich anhand der LED-Statusanzeige am neu eingesetzten Verstärkermodul überprüfen, ob der Austausch erfolgsversprechend war.

Die Mobilfunkantenne umfasst außerdem vorzugsweise zumindest eine Spannungsversorgungseinrichtung, wobei die zumindest eine Spannungsversorgungseinrichtung an einer oder mehrere Seitensegmenten der ersten oder zweiten seitlichen Gehäuseseite angebracht ist. Die zumindest eine Spannungsversorgungseinrichtung ist dabei vorzugsweise ebenfalls mit einem Bewegungsvektor, der ausschließlich senkrecht oder mit einer Komponente überwiegend senkrecht zur ersten oder zweiten seitlichen Gehäuseseite verläuft auf das Antenenngehäuse aufsteckbar oder von diesem abziehbar. Die Spannungsversorgungseinrichtung verfügt ebenfalls über entsprechende Anschlüsse, die über eine Steckverbindung mit den zu korrespondierenden Anschlüssen innerhalb des Antennengehäuses insbesondere werkzeugfrei verbunden werden können. Vorzugsweise werden mehrere Spannungsversorgungseinrichtungen eingesetzt, wobei die Mobilfunkantenne auch bei Ausfall einer Spannungsversorgungseinrichtung ohne Funktionseinbußen bzw. mit nur geringfügigen Einbußen in der Sendeleistung weiterbetrieben werden kann. Die Spannungsversorgungseinrichtung kann ebenfalls, wie auch die Verstärkermodule, eine Arretiereinrichtung aufweisen. Sie kann ebenfalls ein Anzeigeelement umfassen.

Die Signalaufbereitungs- und/oder Steuereinheit liegt an einem oder mehreren Seitensegmenten der ersten und/oder zweiten seitlichen Gehäuseseite an und/oder auf der Gehäuserückseite des Antennengehäuses auf. Vorzugsweise liegt die zumindest eine Signalaufbereitungs- und/oder Steuereinheit in Draufsicht auf die Gehäuserückseite auf der zumindest einen Spannungsversorgungseinrichtung auf oder überlappt diese in Draufsicht vollständig bzw. teilweise. Vorzugsweise sind dabei die zumindest eine Spannungsversorgungseinrichtung und die Signalaufbereitungs- und/oder Steuereinheit im montierten Zustand der Mobilfunkantenne an dem bodennahen Ende der Mobilfunkantenne angeordnet, weil an diesem die Temperaturen niedriger sind als an dem gegenüberliegenden Ende (keine aufsteigende heiße Luft durch die Verstärkermodule). Die zumindest eine Signalaufbereitungs- und/oder Steuereinheit ist vorzugsweise ebenfalls über eine Steckverbindung mit den entsprechenden Gegenstücken innerhalb des Antennengehäuses verbindbar. Dies bedeutet, dass ein Monteur die Signalaufbereitungs- und/oder Steuereinheit, genauso wie die Spannungsversorgungseinrichtung, werkzeugfrei von dem Antennengehäuse trennen und mit diesem verbinden kann.

Verschiedene Ausführungsbeispiele der Erfindung werden nachfolgend unter Bezugnahme auf die Zeichnungen beispielhaft beschrieben. Gleiche Gegenstände weisen dieselben Bezugszeichen auf. Die entsprechenden Figuren der Zeichnungen zeigen im Einzelnen:
- Figuren 1A, 1B:: eine räumliche Darstellung von verschiedenen Ausführungsbeispielen der erfindungsgemäßen Mobilfunkantenne;
- Figur 2:: ein vereinfachtes Blockschaltbild, das den Aufbau der erfindungsgemäßen Mobilfunkantenne näher erläutert;
- Figur 3:: eine räumliche Darstellung eines Verstärkermoduls der erfindungsgemäßen Mobilfunkantenne;
- Figuren 4, 5:: räumliche Darstellungen des geöffneten Verstärkermoduls;
- Figur 6:: eine räumliche Darstellung eines weiteren Ausführungsbeispiels des Verstärkermoduls;
- Figur 7:: eine vereinfachte räumliche Darstellung der geöffneten erfindungsgemäßen Mobilfunkantenne;
- Figuren 8A, 8B, 8C, 8D:: vereinfachte Darstellungen eines Querschnitts durch die erfindungsgemäße Mobilfunkantenne; und
- Figur 9:: eine Darstellung eines Querschnitts durch die erfindungsgemäße Mobilfunkantenne.

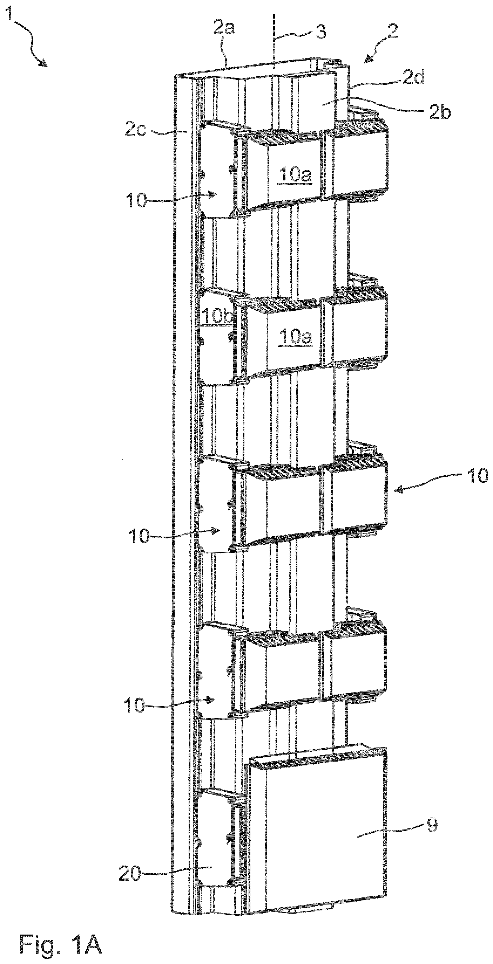

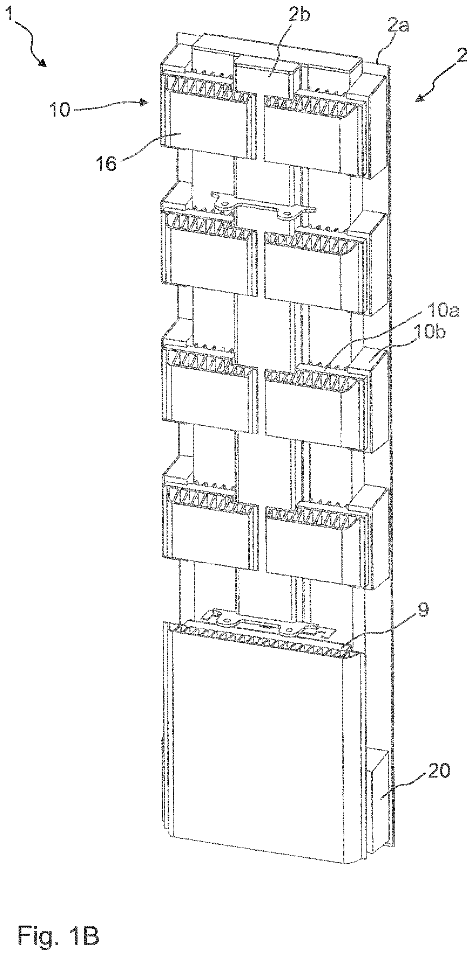

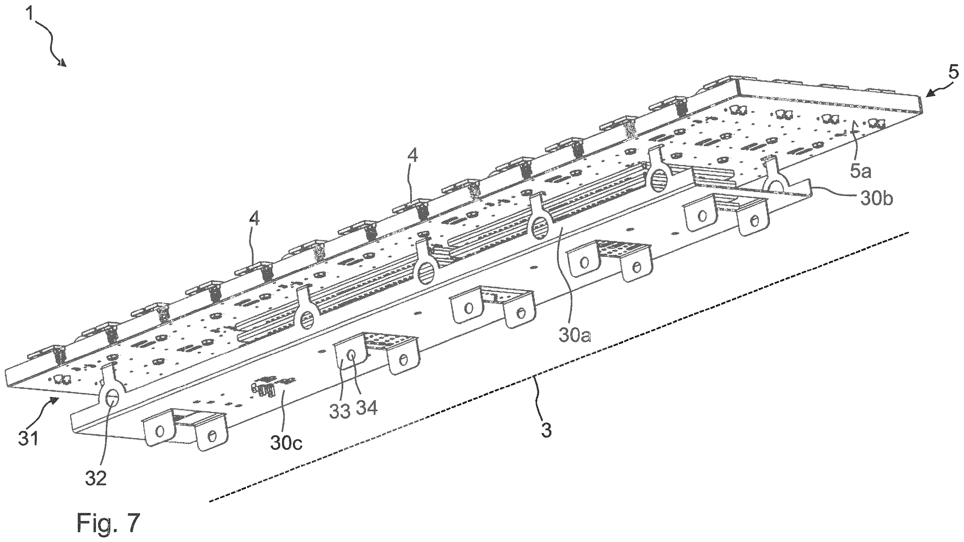

Die Figuren 1A und 1B zeigen eine räumliche Darstellung der erfindungsgemäßen Mobilfunkantenne 1. Die erfindungsgemäße Mobilfunkantenne 1 kann an einem mast- oder wandförmigen Träger befestigt werden. Sie dient dazu unterschiedliche Kommunikationsstandards für mobile Endgeräte bereit zu stellen. Die Mobilfunkantenne 1 umfasst zumindest ein Antennengehäuse 2, das eine Gehäusevorderseite 2a, eine Gehäuserückseite 2b und eine erste und eine dazu gegenüberliegende zweite seitliche Gehäuseseite 2c, 2d aufweist, die zusammen eine umlaufende Gehäusewand bilden. Das Antennengehäuse 2 verläuft dabei entlang einer Längsachse 3, wie diese beispielsweise in Figur 7 dargestellt ist.

In dem Antennengehäuse 2 sind mehrere Strahler oder Strahlerpaare 4 (s. Figur 7) vor zumindest einem Reflektor 5 beabstandet angeordnet. Diese Strahler oder Strahlerpaare gehören zu einer vorzugsweise dipolförmigen Strahleranordnung. Die dipolförmige Strahleranordnung umfasst dabei zwei Paare von Strahlerhälften, die um 90° verdreht zueinander so angeordnet sind, dass die dipolförmige Strahleranordnung in zwei senkrecht zueinander stehenden Polarisationsebenen sendet und/oder empfängt. Die Strahlerhälften, also die beiden Strahlerpaare sind dabei in einer Strahlerebene ausgerichtet, die sich vorzugsweise parallel zum Reflektor 5 erstreckt. Die Strahler bzw. Strahlerpaare 4 umfassen außerdem eine Symmetrie- und/oder Trägeranordnung, die ein erstes Ende und ein zweites Ende aufweist, wobei das zweite Ende dem ersten Ende gegenüber liegt. Die Strahler bzw. Strahlerpaare 4 sind am ersten Ende der Symmetrie- und/oder Trägeranordnung angeordnet. Das zweite Ende der Symmetrie- und/oder Trägeranordnung ist an dem Reflektor 5 befestigt. Die dipolförmige Strahleranordnung ist vorzugsweise in Form eines Vektordipols, eines Kreuzdipols oder eines Dipolquadrats ausgebildet.

Die Strahler oder Strahlerpaare 4 sind innerhalb des Antennengehäuses 2 derart angeordnet, dass diese ihre Mobilfunksignale durch die Gehäusevorderseite 2a und gegebenenfalls zumindest teilweise durch die erste oder zweite seitliche Gehäuseseite 2c, 2d abstrahlen.

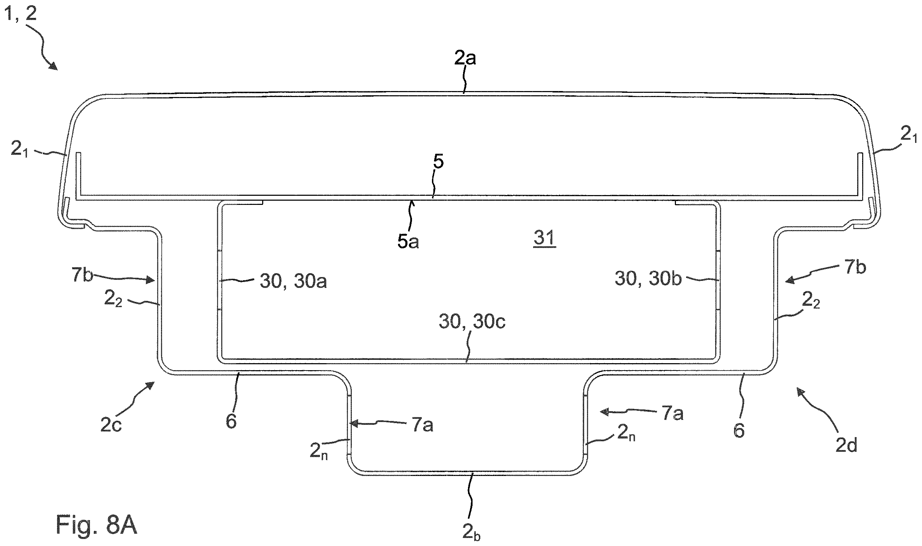

Bezüglich der Form des Antennengehäuses 2 wird auf die Figuren 8A bis 8C verwiesen. Diese zeigen eine Draufsicht auf einen Querschnitt durch das Antennengehäuse 2. Die erste und die zweite seitlichen Gehäuseseiten 2c, 2d sind stufenförmig ausgebildet und umfassen jeweils n Seitensegmente 2₁, 2_{2,} 2ₙ mit n ≥ 2 oder n ≥ 3. Das erste Seitensegment 3₁ der ersten und zweiten seitlichen Gehäuseseite 2c, 2d schließt sich an die Gehäusevorderseite 2a an. Im Gegensatz dazu schließt sich das n-te Seitensegment 2ₙ der ersten und der zweiten seitlichen Gehäuseseite 2c, 2d an die Gehäuserückseite 2b an. Unter "Anschließen" wird eine einteilige oder mehrteilige Verbindung, beispielsweise unter Einbeziehung eines mechanischen Kraftschlusses, wie beispielsweise einer Schraubverbindung verstanden.

Ein Abstand zwischen den jeweiligen Seitensegmenten 2₁, 2_{2,} 2ₙ der ersten und der zweiten seitlichen Gehäuseseite 2c, 20 verringert sich vorzugsweise sukzessive vom ersten Seitensegment 2₁ hin zum n-ten Seitensegment 2ₙ. Die einzelnen Seitensegmente 2₁, 2_{2,} 2ₙ sind über Verbindungssegmente 6 miteinander verbunden. Diese Verbindungssegmente 6 verlaufen vorzugsweise parallel zum Reflektor 5, bzw. vorzugsweise parallel oder mit einer Komponente überwiegend parallel zur Gehäusevorderseite 2a bzw. Gehäuserückseite 2b des Antennengehäuses 2. Grundsätzlich könnten diese Verbindungssegmente 6 auch schräg, also in einem Winkel von beispielsweise 45° zum Reflektor 5 verlaufen.

Dadurch, dass das Antennengehäuse 2 in Draufsicht auf seinen Querschnitt stufenförmige, bzw. zickzackförmige seitliche Gehäuseseiten 2c, 2d aufweist, werden dadurch Aufnahmeräume für weitere Module geschaffen. Diese weiteren Module bzw. Funktionseinheiten können über entsprechende Anschlussöffnungen 7a, 7b mit Komponenten innerhalb des Antennengehäuses 2 verbunden und an dem Antennengehäuse 2 befestigt werden. Hierzu weist die erste und/oder zweite seitliche Gehäuseseite 2c, 2d an zwei unterschiedlichen Seitensegmenten 2₁, 2_{2,} 2ₙ zumindest zwei Anschlussöffnungen 7a, 7b auf, denen eine erste und eine zweite Anschlusskontakteinrichtung 8a, 8b zugeordnet ist. Die zumindest eine erste und die zumindest eine zweite Anschlusskontakteinrichtung 8a, 8b sind vorzugsweise längenunveränderlich und ortsfest im Bereich der Anschlussöffnungen 7b, 7b angeordnet.

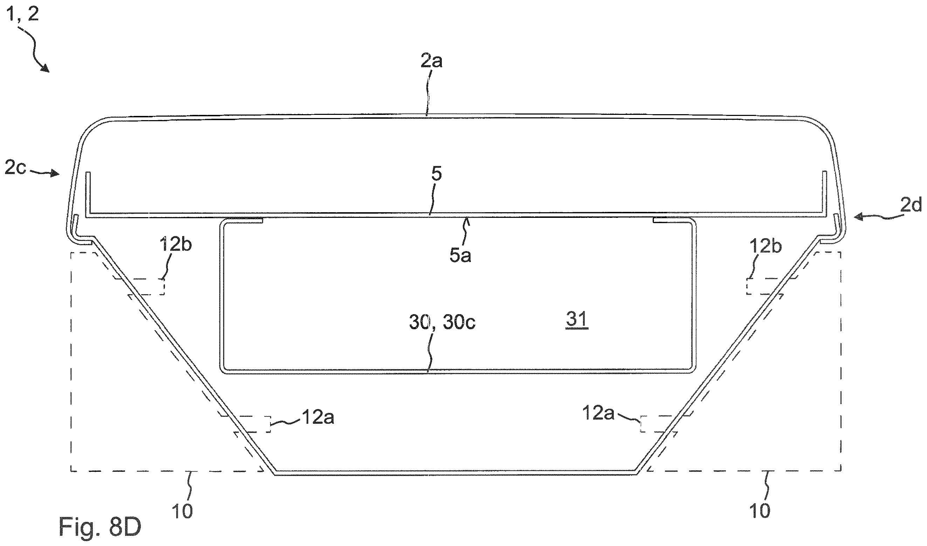

Figur 8D zeigt dagegen ein weiteres Ausführungsbeispiel der Mobilfunkantenne 1. In diesem Ausführungsbeispiel verjüngt sich das Antennengehäuse 2 ganz allgemein von der Gehäusevorderseite 2a hin zur Gehäuserückseite 2b. In Draufsicht auf einen Querschnitt durch das Antennengehäuse 2 verlaufen die erste und/oder die zweite seitliche Gehäuseseite 2c, 2d in zumindest in einem Teilbereich von der Gehäusevorderseite 2a zur Gehäuserückseite 2b mit einer Komponente in Richtung der gegenüberliegenden seitlichen Gehäuseseite 2c, 2d. Dadurch weist die Gehäuserückseite 2b eine kleinere Breite auf als die Gehäusevorderseite 2a. Gestrichelt dargestellt sind zwei Verstärkermodule 10 angedeutet, deren Gehäusekontur an die Kontur der ersten oder zweiten seitlichen Gehäuseseite 2c, 2d angepasst ist. Weiterhin sind die jeweiligen Anschlussports 12a, 12b der Verstärkermodule 10 dargestellt. Diese greifen an unterschiedlichen Seitenwandabschnitten der ersten oder zweiten seitlichen Gehäuseseite 2c, 2d ein. Der Verlauf der ersten oder zweiten seitlichen Gehäuseseite 2c, 2d kann in Draufsicht auf den Querschnitt durch das Antennengehäuse 2 zumindest teilweise bzw. abschnittweise gerade oder bogen- oder teilkreisförmig ausgeführt oder in winklig zueinander ausgerichtete Seitenwandabschnitte gegliedert sein.

Die schräg- bzw. stufenförmig verlaufende Kontur der ersten oder zweiten seitlichen Gehäuseseite 2c, 2d kann sich über die gesamte Länge des Antennengehäuses 2 oder über eine demgegenüber geringere Teillänge erstrecken. In diesem Fall ist diese Kontur bevorzugt im mittleren Bereich des Antennengehäuses 2 vorgesehen.

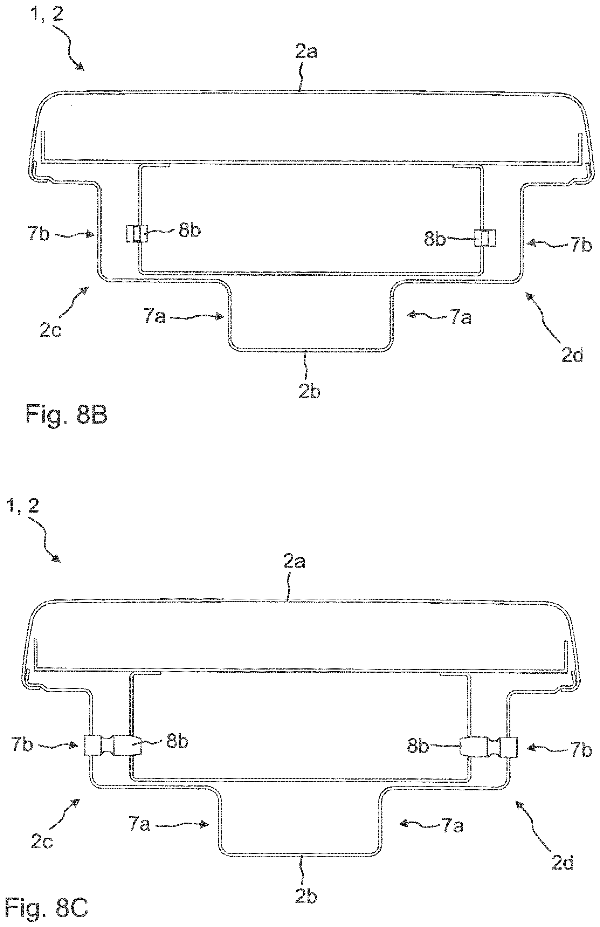

Die Anschlusskontakteinrichtungen 8a, 8b sind in den Figuren 8B und 8C dargestellt. Sie können, wie in Figur 8C gezeigt auch aus der jeweiligen Anschlussöffnung 7a, 7b herausragen, und sich nach außerhalb des Antennengehäuses 2 erstrecken. In Figur 8B sind die Anschlusskontakteinrichtungen 8a, 8b ausschließlich innerhalb des Antennengehäuses 2 angeordnet.

Diese Anschlusskontakteinrichtungen 8a, 8b dienen dazu, die Strahler bzw. Strahlerpaare 4 über einen Verstärker mit der zumindest einen Signalaufbereitungs- und/oder Steuereinheit 9 zu verbinden, die ebenfalls Bestandteil der Mobilfunkantenne 1 ist. Ein solcher zwischen die Strahler bzw. Strahlerpaare 4 und die Signalaufbereitungs- und/oder Steuereinheit 9 geschalteter Verstärker ist insbesondere in zumindest einem Verstärkermodul 10 angeordnet bzw. integriert. Vorzugsweise werden mindestens zwei Verstärkermodule 10 eingesetzt. Weiter vorzugsweise werden mindestens zwei Verstärkermodule 10 pro Band eingesetzt, wobei die Signalübertragung auf einem Band auch bei Ausfall eines Verstärkermoduls 10 noch gewährleistet sein soll. Das zumindest eine Verstärkermodul 10 ist an der Außenseite des Antennengehäuses 2 befestigbar bzw. befestigt. Das zumindest eine Verstärkermodul 10 bildet vorzugsweise einen Sendeverstärker, der Mobilfunksignale verstärkt, die über die Strahler oder Strahlerpaare 4 ausgesendet werden.

Bei Einsatz mehrerer Verstärkermodule 10 ist es auch möglich, dass das zumindest eine Verstärkermodul 10 einen Empfangsverstärker bildet, der Mobilfunksignale verstärkt, die über die Strahler oder Strahlerpaare 4 empfangen werden. Vorzugsweise ist der zumindest eine Empfangsverstärker allerdings in der Signalaufbereitungs- und/oder Steuereinheit 9 integriert.

Das zumindest eine Verstärkermodul 10 bzw. die Verstärkermodule 10 ist/sind mit Blick auf die erste und/oder die zweite seitliche Gehäuseseite 2c, 2d auf das Antennengehäuse 2 aufsteckbar. Dabei ist das zumindest eine Verstärkermodul 10 werkzeugfrei aufsteck- bzw. abziehbar. Dies bedeutet, dass keine Schraubverbindungen ggf. unter Einsatz von Werkzeug gelöst werden müssen. Gerade das werkzeugfreie Aufstecken bzw. Abziehen des zumindest einen Verstärkermoduls 10 von dem Antennengehäuse 2 ist für einen Monteur in großer Höhe von unschätzbarem Vorteil.

Dabei ist das zumindest eine Verstärkermodul 10 mit einem Bewegungsvektor, der ausschließlich senkrecht oder der mit einer Komponente überwiegend senkrecht zur ersten oder zur zweiten seitlichen Gehäuseseite 2c, 2d verläuft und/oder der parallel oder mit einer Komponente überwiegend parallel zur Reflektorebene des Reflektors 5 verläuft auf das Antennengehäuse 2 aufsteckbar oder von diesem abziehbar. In Draufsicht auf die Gehäusevorderseite 2a des Antennengehäuses 2 ist das zumindest eine Verstärkermodul 10 im montiertem Zustand vorzugsweise vollständig durch die Gehäusevorderseite 2a verdeckt.

In den Figuren 1A und 1B ist dargestellt, dass die Mobilfunkantenne 1 mehrere Verstärkermodule 10 umfasst. Die Verstärkermodule 10 sind entlang der Längsachse 3 voreinander beabstandet an der ersten seitlichen Gehäuseseite 2c und an der zweiten seitlichen Gehäuseseite 2d angebracht. Die Verstärkermodule 10, die an der ersten seitlichen Gehäuseseite 2c angebracht sind, stehen vorzugsweise in keinem mechanischen Kontakt (sind also kontaktfrei) zu den Verstärkermodulen 10, die an der zweiten seitlichen Gehäuseseite 2d angebracht sind.

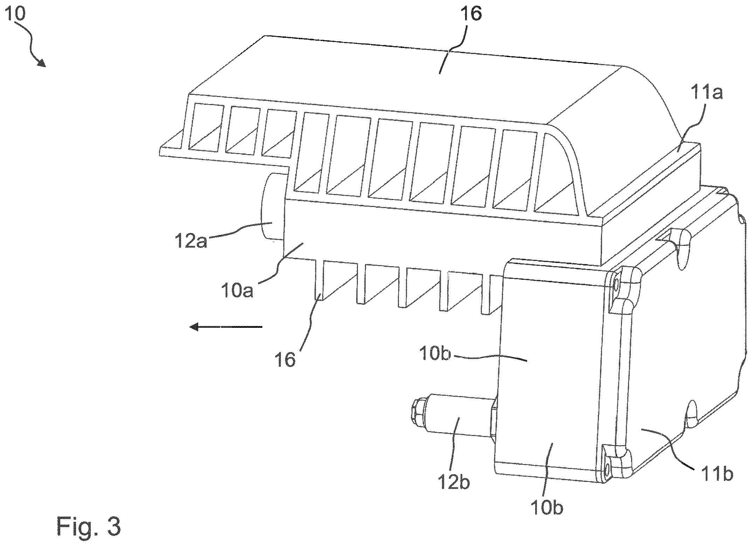

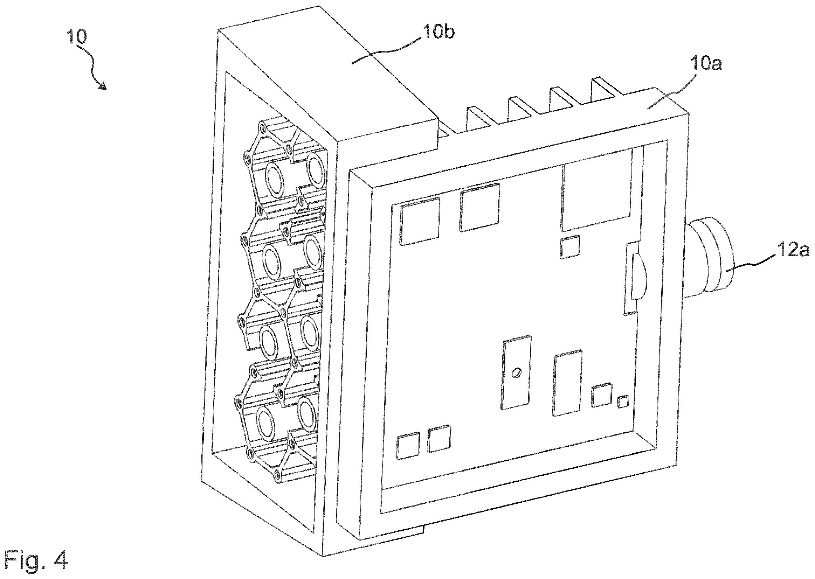

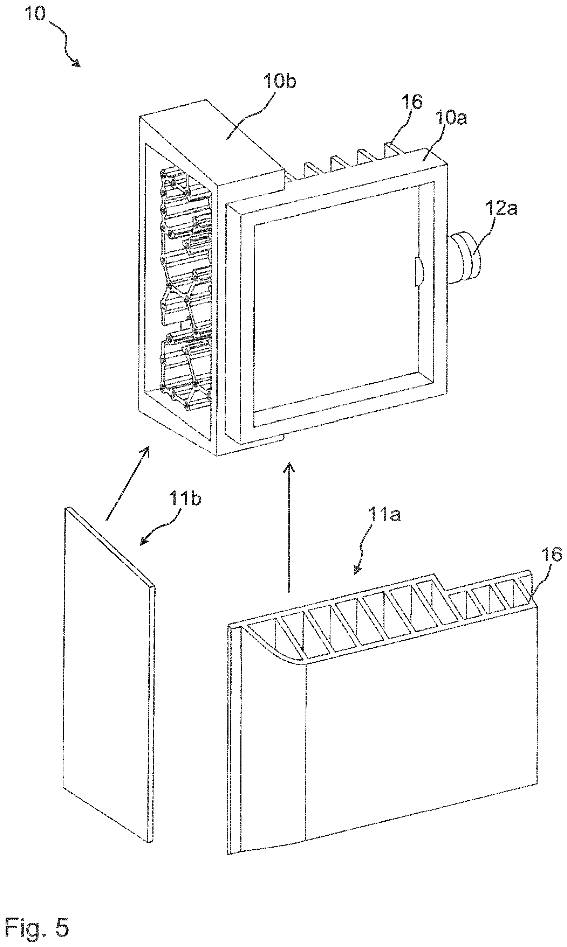

Mit Hinblick auf die Figuren 3, 4, 5 und 6 werden der Aufbau und die Funktionsweise der Verstärkermodule 10 näher erläutert.

Das Verstärkermodul 10 umfasst den eigentlichen Verstärker (insbesondere Sendeverstärker aber auch alternativ einen Empfangsverstärker) mit einer Endstufe und einer Treiberstufe. Gegebenenfalls kann auch ein Zirkulator zur Entkoppelung vorgesehen sein. Diese Komponenten sind in einem Verstärkergehäuse 10a untergebracht. In Ergänzung dazu verfügt das zumindest eine Verstärkermodul 10 vorzugsweise allerdings noch über ein Filtergehäuse 10b. In dem Filtergehäuse 10b ist ein Hochfrequenzfilter, insbesondere ein solches Hochfrequenzfilter in Cavity-Bauweise angeordnet. Sowohl das Filtergehäuse 10b als auch das Verstärkergehäuse 10a umfassen einen Gehäusekörper, der aus Seitenelementen und einem Bodenelement gebildet ist. Dieser Gehäusekörper wird mit entsprechenden Gehäusedeckeln 11a, 11b abgeschlossen. Ein erster Gehäusedeckel 11a dient zum Abschluss des Verstärkergehäuses 10a, wohingegen ein zweiter Gehäusedeckel 11b zum Abschluss des Filtergehäuses 10b dient.

Über eine nicht dargestellte Signalleitung sind das Filtergehäuse 10b und das Verstärkergehäuse 10a miteinander zur Signalübertragung verbunden bzw. gekoppelt. Insbesondere kann der Ausgang des Leistungsverstärkers in dem Verstärkergehäuse 10a über die Signalleitung mit einem ersten Resonator, und innerhalb diesem mit insbesondere einem ersten Resonator-Innenleiter innerhalb des Filtergehäuses 10b gekoppelt werden. Eine solche Kopplung erfolgt vorzugsweise kapazitiv. Sie könnte allerdings auch induktiv oder galvanisch erfolgen. In dem Filtergehäuse 10b sind weitere Resonatoren ausgebildet, die mehr oder weniger stark miteinander gekoppelt sind, wodurch sich die gewünschte Filterkurve einstellt.

Das Verstärkergehäuse 10a und das Filtergehäuse 10b des zumindest einen Verstärkermoduls 10 bestehen aus und umfassen Metall oder eine Metalllegierung. Das Verstärkergehäuse 10a und das Filtergehäuse 10b können aus einem gemeinsamen Fräs- und/oder Gussteil hergestellt werden, so dass sie zerstörungsfrei nicht voneinander trennbar sind. Vorzugsweise sind das Verstärkergehäuse 10a und das Filtergehäuse 10b aus separat gebildeten Fräs- und/oder Gussteilen gebildet, die über eine mechanische Verbindung, insbesondere eine Schraubverbindung, fest miteinander verbunden sind.

Das zumindest eine Verstärkermodul 10 ist dabei vorzugsweise L-förmig ausgebildet und orientiert sich mit seiner Gehäuseform an die Form der stufenförmig ausgebildeten ersten oder zweiten seitlichen Gehäuseseite 2c, 2d des Antennengehäuses 2. Diese Form wird insbesondere dadurch realisiert, dass das Verstärkergehäuse 10a vorzugsweise mit seiner längeren Seite senkrecht oder mit einer Komponente überwiegend senkrecht zur Längsachse 3 ausgerichtet ist, wohingegen das Filtergehäuse 10b vorzugsweise mit seiner längeren Seite parallel oder mit einer Komponente überwiegend parallel zur Längsachse 3 ausgerichtet ist. Das Filtergehäuse 10b und das Verstärkergehäuse 10a stehen vorzugsweise senkrecht zueinander. In diesem Zustand werden das Verstärkergehäuse 10a und das Filtergehäuse 10b miteinander verschraubt und in das Antennengehäuse 2 eingeschoben.

Zur Kontaktierung umfasst das Verstärkermodul 10 einen ersten Anschlussport 12a und einen zweiten Anschlussport 12b. Der erste Anschlussport 12a und der zweite Anschlussport 12b des zumindest einen Verstärkermoduls 10 sind über die beiden Anschlussöffnungen 7a, 7b der ersten oder zweiten Gehäuseseite 2c, 2d mit der ersten und der zweiten Anschlusskontakteinrichtung 8a, 8b durch eine Steckverbindung verbunden.

Für den Fall, dass das Verstärkermodul 10 kein Filtergehäuse 10b umfasst, sind beide Anschlussports 12a, 12b am Verstärkergehäuse 10a ausgebildet. Die Ausführungsbeispiele der Figuren 3 bis 6 zeigen dagegen ein Filtergehäuse 10b, so dass der erste Anschlussport 12a am Verstärkergehäuse 10a ausgebildet und der zweite Anschlussport 12b am Filtergehäuse 10b ausgebildet ist. Über den ersten Anschlussport 12a werden zu verstärkende Signale von der Signalaufbereitungs- und/oder Steuereinheit 9 an das Verstärkergehäuse 10a und den darin befindlichen Leistungsverstärker übertagen. Mit einer nicht dargestellten Signalleitung werden die verstärkten Signale vom Verstärkergehäuse 10a in das Filtergehäuse 10b übertagen und dort von etwaigen Oberwellen befreit am zweiten Anschlussport 12b ausgegeben. Der zweite Anschlussport 12b führt dann zu etwaigen Phasenschiebern und von dort bzw. direkt zu den Strahlern oder Strahlerpaaren 4.

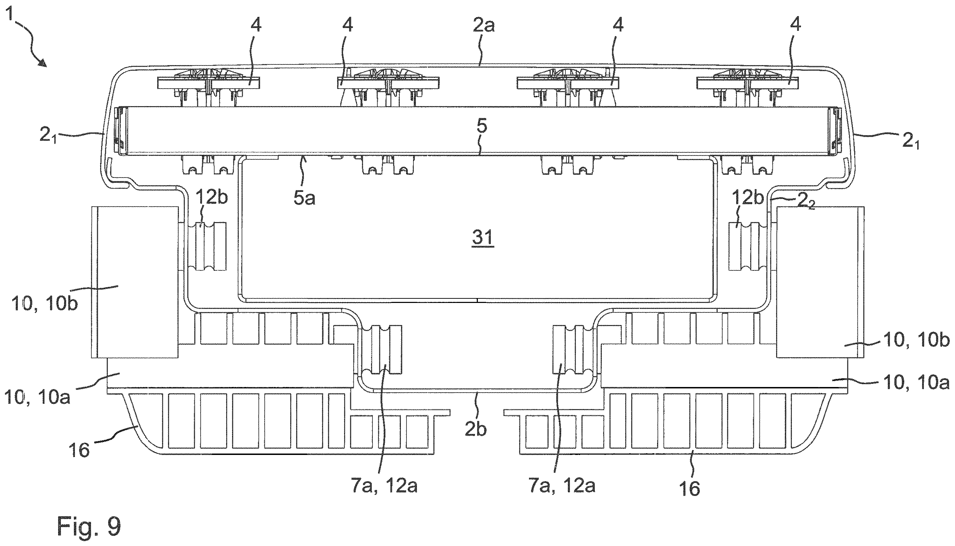

Figur 9 zeigt einen weiteren Querschnitt durch die erfindungsgemäße Mobilfunkantenne 1. In diesem ist zu erkennen, dass sich der erste Anschlussport 12a und der zweite Anschlussport 12b des zumindest einen Verstärkermoduls 10 durch die Anschlussöffnungen 7a, 7b, die in unterschiedlichen Seitensegmenten 2₁, 2_{2,} 2ₙ der ersten oder zweiten seitlichen Gehäuseseite 2c, 2d ausgebildet sind, in das Antennengehäuse 2 hinein erstrecken. In diesem Antennengehäuse 2 sind sie mit den ersten und zweiten Anschlusskontakteinrichtungen 8a, 8b durch eine Steckverbindung verbunden. Diese Anschlusskontakteinrichtungen 8a, 8b sind zur besseren Übersichtlichkeit nicht in Figur 9 dargestellt. Diese Verbindung kann dadurch gelöst werden, in dem das Verstärkermodul 10 einfach von dem Antennengehäuse 2 seitlich abgezogen wird.

Die Anschlusskontakteinrichtungen 8a, 8b können sich auch durch die Anschlussöffnungen 7a, 7b nach außerhalb des Antennengehäuses erstrecken, wobei die Steckverbindungen zwischen den Anschlusskontakteinrichtungen 8a, 8b und den Anschlussports 12a, 12b außerhalb des Antennengehäuses 2 gebildet sind. Um sicherzustellen, dass keine Feuchtigkeit durch die Anschlussöffnungen 7a, 7b in das Antennengehäuse 2 eindringt, ist der erste und/oder zweite Anschlussport 12a, 12b des zumindest einen Verstärkermoduls 10 mit einer Dichteinrichtung versehen. Gleiches könnte auch für die erste und/oder zweite Kontakteinrichtung 8a, 8b gelten, wenn sich diese durch die Anschlussöffnungen 7a, 7b nach außerhalb des Antennengehäuses 2 erstrecken. Die Kontaktierung der Anschlussports 12a, 12b mit den Anschlusskontakteinrichtungen 8a, 8b erfolgt gewindefrei und/oder schraubenfrei und/oder lötfrei. Dabei sind die Anschlussports 12a, 12b oder die Anschlusskontakteinrichtungen 8a, 8b als Stecker bzw. als Buchse ausgebildet.

Für jedes Verstärkermodul 10 gibt es vorzugsweise genau zwei solcher Anschlussöffnungen 7a, 7b. Diese sind an der ersten Gehäuseseite 2c oder an der zweiten Gehäuseseite 2d eingebracht.

Die Anschlussöffnungen 7a, 7b an denen das zumindest eine Verstärkermodul 10 eingreift oder in Kontakt steht, sind an zueinander benachbarten (unmittelbar) Seitensegmenten 2₁, 2₂, 2ₙ der ersten oder zweiten seitlichen Gehäuseseite 2c, 2d angeordnet. Alternativ dazu können die Anschlussöffnungen 7a, 7b auch an Seitensegmenten 2₁, 2_{2,} 2ₙ der ersten oder zweiten seitlichen Gehäuseseite 2c, 2d angeordnet sein, die durch zumindest ein weiteres Seitensegment 2₁, 2₂, 2ₙ voneinander beabstandet sind.

Mit Hinblick auf Figur 3 ist zu erkennen, dass der erste Anschlussport 12a des Verstärkermoduls 10 in Einsteckrichtung (gekennzeichnet durch einen Pfeil) fortlaufend gegenüber dem zweiten Anschlussport 12b angeordnet ist. Dies bedeutet, dass der erste Anschlussport 12a gegenüber dem zweiten Anschlussport 12b vorsteht. Die Ausrichtung könnte auch umgekehrt sein.

Im montierten Zustand ist der zweite Anschlussport 12b des zumindest einen Verstärkermoduls 10 vorzugsweise näher an der Gehäusevorderseite 2a angeordnet als der erste Anschlussport 12a des zumindest einen Verstärkermoduls 10. Es wäre auch möglich, das der erste und der zweite Anschlussport 12a, 12b des zumindest einen Verstärkermoduls 10 in Richtung der Längsachse 3 versetzt zueinander angeordnet sind. Vorzugsweise verlaufen beide Anschlussports 12a, 12b eines Verstärkermoduls durch eine gemeinsame Ebene, die wiederum vorzugsweise senkrecht zur Reflektorebene des Reflektors 5 angeordnet ist.

Im montierten Zustand ist das Verstärkergehäuse 10a mit seiner längeren Seite senkrecht oder mit einer Komponente überwiegend senkrecht zur Längsachse 3, also parallel oder mit einer Komponente überwiegend parallel zur Reflektorebene des Reflektors 5 ausgerichtet. Umgekehrt ist das Filtergehäuse 10b mit seiner längeren Seite parallel oder mit einer Komponente überwiegend parallel zur Längsachse 3, also senkrecht oder mit einer Komponente überwiegend senkrecht zur Reflektorebene des Reflektors 5 ausgerichtet. Dies bedeutet, dass das Filtergehäuse 10b und das Verstärkergehäuse 10a senkrecht bzw. mit einer Komponente überwiegend senkrecht zueinander ausgerichtet sind. Beide Gehäuse 10a, 10b sind vorzugsweise über einen mechanischen Kraftschluss, insbesondere einer Schraubverbindung fest miteinander verbunden, so dass ein geringer Wärmeübergangswidertand erreicht wird. Dies hat den Vorteil, dass das Filtergehäuse 10b als Wärmesenke für das Verstärkergehäuse 10a dienen kann, wodurch sich die wirksame Oberfläche zum Abführen der im Verstärkergehäuse 10a anfallenden Verlustleistung vergrößert.

Das zumindest eine Verstärkermodul 10 umfasst außerdem Kühlrippen 16, die an denjenigen Gehäuseflächen des Verstärkermoduls 10a angebracht sind, die parallel zur Gehäusevorderseite 2a oder Gehäuserückseite 2b des Antennengehäuses 2 verlaufen. Dabei verlaufen die Kühlrippen 16 parallel oder mit einer Komponente überwiegend parallel zur Längsachse 3. Zwischen Kühlrippen 16 sind Luftspalte ausgebildet, die ebenfalls vorzugsweise parallel oder mit einer Komponente überwiegend parallel zur Längsachse 3 verlaufen. Das zumindest eine Verstärkermodul 10a kann auch eine aktive Kühleinrichtung, wie beispielsweise einen Lüfter umfassen. Die Kühlrippen 16, die im montierten Zustand näher an der Gehäusevorderseite 2a angeordnet sind, liegen vorzugsweise auf einem Verbindungssegment 6, welches zwei Seitensegmente 2₁, 2₂, 2ₙ verbindet auf, bzw. sind benachbart zu diesen angeordnet. Die Enden der Kühlrippen, die von der Gehäusevorderseite 2a weiter entfernt sind, können noch zusätzlich mit einer Kühloberfläche versehen sein, die die Enden (Spitzen) der Kühlrippen 16 miteinander verbindet. Die so gebildete Kühloberfläche verläuft dann parallel zur Gehäusevorderseite 2a bzw. parallel zur Reflektorebene des Reflektors 5. Es ist außerdem möglich, dass auch das Filtergehäuse 10b Kühlrippen aufweist.

Die Kühlrippen 16 des zumindest einen Verstärkermoduls 10, die an der Gehäusefläche des Verstärkermoduls 10 angeordnet sind, die näher an der Gehäuserückseite 2b angeordnet ist, stehen mit Blick auf die erste oder zweite seitliche Gehäuseseite 2c, 2d über die Gehäuserückseite 2b hinaus. Die Kühlrippen 16 erstrecken sich vorzugsweise mit zumindest einem Teil über die Gehäuserückseite 2b. Dies bedeutet, dass ein Teil der Kühlrippen 16 auf der Gehäuserückseite 2b aufliegt bzw. lediglich durch einen Spalt von dieser beabstandet sind.

Diese Kühlrippen 16 sind vorzugsweise einteilig mit dem ersten Gehäusedeckel 11a ausgebildet, der das Verstärkergehäuse 10a verschließt.

Bei dem zweiten Gehäusedeckel 11b, der das Filtergehäuse 10b verschließt, handelt es sich vorzugsweise um ein Metallblech, welches noch über eine Dichteinrichtung verfügen kann.

Dadurch, dass das Antennengehäuse 2 im Querschnitt bezüglich seiner ersten und seiner zweiten seitlichen Gehäuseseite 2c, 2d einen Stufenförmigen Verlauf aufweist, entsteht ein Anschlussraum, in welchen das zumindest eine Verstärkermodul 10 angeordnet ist.

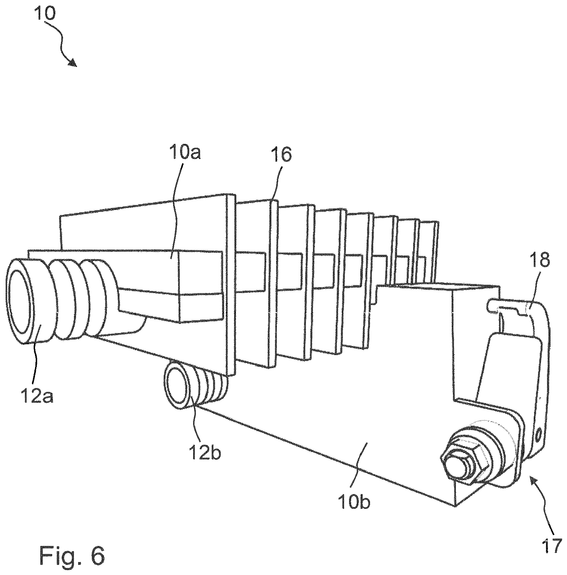

Mit Hinblick auf Figur 6 ist gezeigt, dass das zumindest eine Verstärkermodul 10 eine Arretiereinrichtung 17 umfasst, die an diesem mechanisch befestigt ist. Die Arretiereinrichtung 17 greift im montierten Zustand in eine nicht dargestellte Arretieröffnung ein, die in der ersten oder zweiten seitlichen Gehäuseseite 2c, 2d ausgebildet ist. Dadurch wird verhindert, dass das zumindest eine Verstärkermodul 10 ohne Betätigung der Arretiereinrichtung abziehbar ist. Die Arretiereinrichtung 17 umfasst vorzugsweise einen Betätigungshebel 18. Dieser Betätigungshebel 18 muss umgelegt werden, um das Verstärkermodul 10 von dem Antennengehäuse 2 zu entfernen bzw. aus diesem herauszuziehen. Je nach Stellung dieses Betätigungshebels 18 kann die Arretiereinrichtung 17 zwischen einer Arretierposition und einer Freigabeposition verstellt werden, wobei lediglich in der Freigabeposition das Verstärkermodul 10 entfernt werden kann. Über die Arretiereinrichtung 17 erfolgt vorzugsweise auch der Lastabtrag. Dies bedeutet, dass über die Anschlussports 12a, 12b im montierten Zustand vorzugsweise keine Kräfte übertragen werden. Die auf das zumindest eine Verstärkermodul wirkende Gewichtskraft wird vorzugsweise überwiegend oder ausschließlich über die Arretiereinrichtung 17 in das Antennengehäuse 2 eingeleitet. Dabei gibt es pro Verstärkermodul 10 insbesondere genau eine Arretiereinrichtung 17 mit genau einem Betätigungshebel 18. Dadurch kann ein Monteur lediglich durch einmaliges Betätigen des genau einen Betätigungshebels 18 das Verstärkermodul 10 entfernen und durch ein anderes ersetzen.

Das zumindest eine Verstärkermodul 10 umfasst vorzugsweise ebenfalls ein Anzeigeelement. Bei diesem Anzeigeelement handelt es sich weiter vorzugsweise um eine oder mehrere LEDs (Light Emitting Diodes). Diese Anzeigeelement ist an einer Gehäuseoberfläche des zumindest einen Verstärkermoduls 10 angeordnet. Das Anzeigeelement ist derart angeordnet, dass es von außerhalb des Antennengehäuses 2 sichtbar ist. Insbesondere soll das Anzeigeelement dann sichtbar sein, wenn ein Monteur, der ein defektes Verstärkermodul 10 tauschen möchte, die Mobilfunkantenne 1 am Mast betrachtet. Das zumindest eine Verstärkermodul 10 oder die zumindest eine Signalaufbereitungs- und/oder Steuereinheit 9 sind dann dazu ausgebildet, das Anzeigeelement derart anzusteuern, dass dieses einen Defekt des zumindest einen Verstärkermoduls 10 visuell signalisiert. Das zumindest eine Anzeigeelement kann hierzu auch mehrere LEDs umfassen, die je nach Zustand des Verstärkermoduls 10 mit einer unterschiedlichen Farbe leuchten. Das zumindest eine Anzeigeelement könnte auch an einer anderen Position, wie beispielsweise an der Signalaufbereitungs- und/oder Steuereinheit 9 angeordnet sein.

Mit Hinblick auf die Figuren 1A und 1B ist außerdem zumindest eine Spannungsversorgungseinrichtung 20 dargestellt, die an einem oder mehreren Seitensegmenten 2₁, 2_{2,} 2ₙ der ersten oder zweiten seitlichen Gehäuseseite 2c 2d anliegt. Die zumindest eine Spannungsversorgungseinrichtung 20 dient zur Versorgung der Signalaufbereitungs- und/oder Steuereinheit 9 und des zumindest einen Verstärkermoduls 10. Durch diese werden die aktiven Komponenten versorgt. Die Befestigung der Spannungsversorgungseinrichtung 20 erfolgt vorzugsweise in Analogie zu der Befestigung des zumindest einen Verstärkermoduls 10. Auch die zumindest eine Spannungsversorgungseinrichtung 20 umfasst entsprechende Anschlüsse, die mit dazu korrespondierenden Anschlüssen innerhalb des Antennengehäuses 2 durch eine insbesondere gewinde- und/oder schraubenfreie Steckverbindung in vorzugsweise galvanischen elektrischen Kontakt bringbar sind. Hierzu sind ebenfalls entsprechende Öffnungen in der ersten oder zweiten seitlichen Gehäuseseite 2c, 2d eingebracht. Die zumindest eine Spannungsversorgungseinrichtung 20 kann ebenfalls (genau) eine Arretiereinrichtung aufweisen, wodurch die Spanungsversorgungseinrichtung 20 sicherer am Antennengehäuse 2 gehalten ist. Die zumindest eine Spannungsversorgungseinrichtung 20 wird in Draufsicht auf die Gehäusevorderseite 2a durch diese verdeckt. In Draufsicht auf die erste oder zweite seitliche Gehäuseseite 2c, 2d des Antennengehäuses 2, steht die zumindest eine Spannungsversorgungseinrichtung 20 vorzugsweise nicht über die Gehäuserückseite 2b vor bzw. hinaus. Der zumindest einen Spannungsversorgungseinrichtung 20 kann eine Gleichspannung oder eine Wechselspannung zugeführt werden. Sie kann auch eine Gleichspannung oder eine Wechselspannung ausgeben.

Die zumindest eine Spannungsversorgungseinrichtung 20 ist ebenfalls mit einem Bewegungsvektor, der ausschließlich senkrecht oder mit einer Komponente überwiegend senkrecht zur ersten oder zweiten seitlichen Gehäuseseite 2c, 2d verläuft und/oder der parallel oder mit einer Komponente überwiegend parallel zur Reflektorebene des Reflektors 5 verläuft, auf das Antennengehäuse 2 aufsteckbar oder von diesem abziehbar. Vorzugsweise umfasst die Mobilfunkantenne 1 zumindest zwei voneinander getrennte, in vorzugsweise separaten Gehäusen untergebrachte Spannungsversorgungseinrichtungen 20. Die Spannungsversorgungseinrichtungen 20 sind vorzugsweise derart dimensioniert, dass bei Ausfall einer Spannungsversorgungseinrichtung 20 die Mobilfunkantenne 1 ohne Leistungseinbußen bzw. lediglich mit einer geringfügig (< 20%) verringerten Sendeleistung weiterbetrieben werden kann.

Die Signalaufbereitungs- und/oder Steuereinheit 9 liegt an einem oder mehreren der Seitensegmenten 2₁, 2_{2,} 2ₙ der ersten und/oder zweiten seitlichen Gehäuseseite 2c, 2d an und/oder auf der Gehäuserückseite 2b des Antennengehäuses 2 auf. In Draufsicht auf die Gehäuserückseite 2b liegt die Signalaufbereitungs- und/oder Steuereinheit auf der zumindest einen Spannungsversorgungseinrichtung 20 auf und/oder überlappt diese in Draufsicht vollständig oder zumindest teilweise. Auch die Signalaufbereitungs- und/oder Steuereinheit 9 ist lediglich durch eine Steckverbindung mit entsprechenden Anschlüssen innerhalb des Antennengehäuses 2 verbunden. Sowohl die Spannungsversorgungseinrichtung 20, als auch die Signalaufbereitungs- und/oder Steuereinheit 9 können vorzugsweise ohne den Einsatz von Werkzeug getauscht werden. Die Signalaufbereitungs- und/oder Steuereinheit 9 umfasst vorzugsweise ebenfalls (genau) eine Arretiereinrichtung 21, mit der sie noch zusätzlich am Antennengehäuse 2 befestigt ist. Der zumindest einen Signalaufbereitungs- und/oder Steuereinheit 9 kann eine Gleichspannung oder ein Signal mit einem Gleichanteil oder eine Wechselspannung zugeführt werden. Sie kann auch eine Gleichspannung oder ein Signal mit einem Gleichanteil oder eine Wechselspannung ausgeben.

Die zumindest eine Spannungsversorgungseinrichtung 20 und die zumindest eine Signalaufbereitungs- und/oder Steuereinheit 9 sind im montierten Zustand der Mobilfunkantenne 1 vorzugsweise am bodenseitigen Ende der Mobilfunkantenne 1 angeordnet.

Mit Hinblick auf Figur 1B ist anzumerken, dass die oberen vier Verstärkermodule 10 beispielsweise für die Bereitstellung des Bands 7 und die unteren 4 Verstärkermodule für die Bereitstellung des Bands 3 verwendet werden.

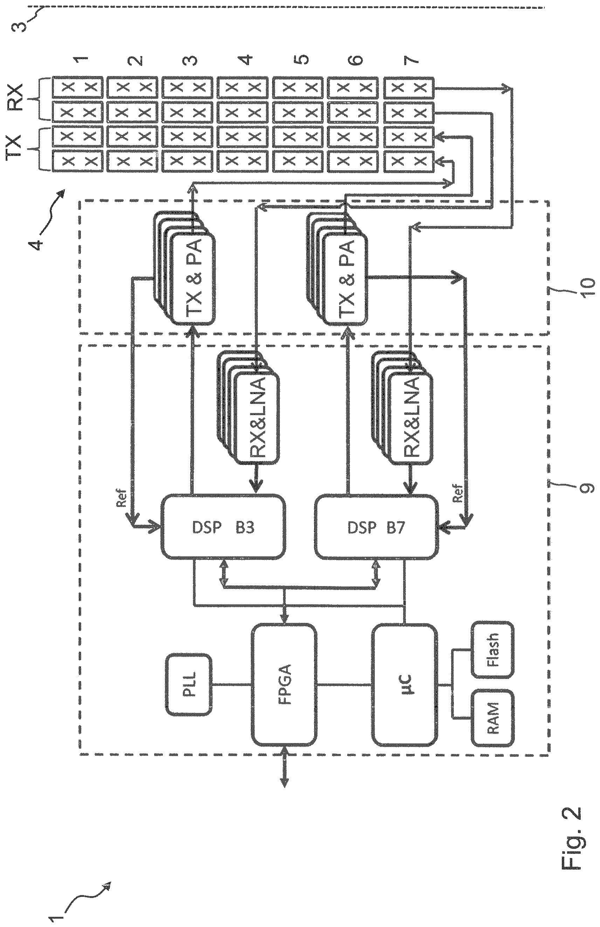

In Figur 2 ist ein vereinfachtes Blockschaltbild dargestellt, das die Funktionsweise der Mobilfunkantenne 1 näher erläutert. Die Mobilfunkantenne 1 umfasst eine Vielzahl von Strahlern oder Strahlerpaaren 4, die beabstandet vor dem Reflektor 5 angeordnet sind. Die Vielzahl von Strahlern oder Strahlerpaaren 2 sind auf der Reflektorvorderseite, die in Richtung der Gehäusevorderseite 2a zeigt, in zumindest zwei Spalten (in Figur 2 sind vier Spalten dargestellt) angeordnet, wobei die Spalten parallel zueinander verlaufen und die Strahler oder Strahlerpaare 4 in den Spalten in Richtung der Längsachse 3 versetzt zueinander angeordnet sind. Insgesamt sind in diesem Ausführungsbeispiel in jeder Spalte sieben Strahler bzw. Strahlerpaare 4 angeordnet. Es können auch mehr oder weniger Strahler oder Strahlerpaare 4 ausgebildet sein. Vorzugsweise sind in einer Spalte lediglich Strahler oder Strahlerpaare 4 angeordnet, die nur ein Mobilfunksignal aussenden, wohingegen in einer anderen Spalte lediglich Strahler oder Strahlerpaare 4 angeordnet sind, die nur ein Mobilfunksignal empfangen.

In Figur 2 sind in den zwei benachbarten Spalten auf der linken Seite lediglich Strahler oder Strahlerpaare 4 angeordnet, die ein Mobilfunksignal aussenden, wohingegen in den zwei benachbarten Spalten auf der rechten Seite lediglich Strahler oder Strahlerpaare 4 angeordnet sind, die ein Mobilfunksignal empfangen. Durch die derartige Trennung kann der Wirkungsgrad gesteigert werden, weil die Entkopplung durch die separaten Strahler bzw. Strahlerpaare 4 für die Sende- und Empfangsrichtung die Filteranforderungen um ca. 25 bis 30 dB senken. Dadurch können die Filter, beispielsweise das Filtergehäuse 10b, kleiner und leichter und mit einer geringeren Durchgangsdämpfung gebaut werden, was wiederum den Wirkungsgrad verbessert und im Gegenzug die Verlustleistung minimiert. In einer beschrieben bevorzugten Ausführung sind daher die Filter direkt in die Verstärkermodule 10 integriert. Dies hat den Vorteil, dass die zur Erwärmung erforderliche Baugröße der Verstärkermodule 10 gleichzeitig mit in typischer Weise aus Aluminium bestehenden Filtern zur Wärmespreizung und Kühlung mitgenutzt werden kann. Dadurch ist die Anpassung des Verstärkers und des Filters einfacher möglich. Natürlich könnte auch das Filter direkt innerhalb des Antennengehäuses 2 integriert sein, so dass das Verstärkermodul 10 dann im Wesentlichen nur aus der Sendeverstärkereinheit mit Endstufe und Treiberstufe und eventuell noch einem Zirkulator zur Entkopplung bestehen würde.

Durch die Trennung der Strahler bzw. Strahlerpaare 4 kann ein Intermodulationswert von -175 bis -180 dBc erreicht werden. Ein LTE-System benötigt einen theoretischen Intermodulationswert der besser ist als -163 dBc. Dies konnte in der herkömmlichen Bauweise bisher nicht in Serie realisiert werden. Durch den erfindungsgemäßen Aufbau geht auch eine Gewichtsreduzierung von ca. 40 % gegenüber einer herkömmlichen Lösung einher. Die Mobilfunkantenne kann unterschiedliche Mobilfunkstandards wie GSM, CDMA, WCDMA, LTE, usw. abdecken. Sie ist geeignet für einen FDD-Betrieb, bzw. TDD-Betrieb.

Mit Hinblick auf Figur 2 ist zu erkennen, dass lediglich die Verstärker für diejenigen Strahler bzw. Strahlerpaare, die ein Mobilfunksignal aussenden, als separate Verstärkermodule 10 ausgeführt sind.

Die Strahler oder Strahlerpaare 4, die lediglich ein Mobilfunksignal empfangen sind mit Eingangsverstärkern verbunden, die vorzugsweise lediglich innerhalb der Signalaufbereitung- und/oder Steuereinheit 9 angeordnet sind. In dieser Signalaufbereitung- und/oder Steuereinheit 9 sind dann weiterhin die digitalen Signalprozessoren integriert, die beispielsweise das Band 3 und das Band 7 erzeugen. Die Signalaufbereitung- und/oder Steuereinheit 9 ist über eine digitale Schnittstelle (z.B. Glasfaser) mit einer nicht dargestellten Basisstation oder einem Mobilfunknetz verbunden bzw. verbindbar.

Die Figur 7 zeigt eine vereinfachte räumliche Darstellung der geöffneten Mobilfunkantenne 1, wohingegen die Figur 9 einen vereinfachten Querschnitt durch die erfindungsgemäße Mobilfunkantenne 1 zeigt. Mit Hinblick auf Figur 7 ist eine innere Gehäuseeinrichtung 30 gezeigt, die vorzugsweise vollständig innerhalb des Antennengehäuses 2 angeordnet ist. Die innere Gehäuseeinrichtung 30 ist an einer Rückseite 5a des zumindest einen Reflektors 5 angeordnet und bildet zusammen mit ihren beiden sich gegenüberliegenden Seitenwänden 30a, 30b, ihrer Rückwand 30c und der Rückseite 5a des Reflektors 5 einen Aufnahmeraum 31. In diesem Aufnahmeraum 31 sind mehrere Phasenschieber (nicht dargestellt) angeordnet. Über diese Phasenschieber ist das zumindest eine Verstärkermodul 10 mittelbar mit den mehreren Strahlern oder Strahlerpaaren 4 zur Signalübertragung verbunden.

Weiterhin können in diesem Aufnahmeraum 31 Band-Split-Filter angeordnet sein, wodurch die einzelnen Spalten der Mobilfunkantenne 1 auf Band 3 und Band 7 aufgeteilt werden bzw. wodurch eine blockweise Zusammenfassung von Strahlergruppen für einen MIMO-Betrieb erfolgen kann. In einer bevorzugten Ausführung sind auch für jedes Band und jede Polarisation separate passive Phasenschieber, beispielsweise in Form einer Dual-Band-Ausführung von passiven Antennen enthalten. Demnach hätte jede Spalte für jedes Band und jede Polarisation einen separaten Anschluss, was zu vier Anschlüssen je Spalte führt, wodurch eine entsprechende Anzahl an Verstärkermodulen 10 notwendig ist.

In den Seitenwänden 30a, 30b der inneren Gehäuseeinrichtung 30 sind ebenfalls Befestigungsöffnungen 32 eingebracht, in welcher zumindest die zweiten Anschlusskontakteinrichtungen 8b angeordnet und/oder befestigt sind.

An der Rückwand 30c der inneren Gehäuseeinrichtung 30 sind in Richtung der Gehäuserückseite 2b des Antennengehäuses 2 Befestigungsfahnen 33 ausgebildet. Diese sind vorzugsweise dadurch hergestellt, dass die Rückwand 30c der inneren Gehäuseeinrichtung 30 zu einem gewissen Teil ausgestanzt wurde, wobei in einem Biegeprozess der ausgestanzten Bereich (dieser ist nur über maximal drei Seiten ausgestanzt) in Richtung der Gehäuserückseite 2b des Antennengehäuses 2 gebogen wird.

In den Befestigungsfahnen 33 sind weitere Befestigungsöffnungen 34 eingebracht bzw. eingestanzt, in welchen zumindest die ersten Anschlusskontakteinrichtungen 8a angeordnet und/oder befestigt sind.
Die innere Gehäuseeinrichtung 30 ist mit ihren gegenüberliegenden Seitenwänden 30a, 30b vorzugsweise über eine Schraubverbindung mit der Rückseite 5a des Reflektors 5 mechanisch verbunden.

Vorzugsweise laufen die Verbindungen zwischen der Signalaufbereitungs- und/oder Steuereinheit 9 und den Verstärkermodulen 10 in einem Bereich zwischen der Gehäuserückseite 2b des Antennengehäuses 2 und einer Rückwand 30c der inneren Gehäuseeinrichtung 30. Weiter vorzugsweise verlaufen die Verbindungen zwischen dem zumindest einen Verstärkermodul 10 und den Strahlern oder Strahlerpaaren 4 zwischen einer Rückseite 5a des Reflektors 5 und der inneren Gehäuseeinrichtung 30, also innerhalb des durch die innere Gehäuseeinrichtung 30 gebildeten Aufnahmeraums 31.

Dadurch kann das zumindest eine Verstärkermodul 10 über seinen ersten Anschlussport 12a mittelbar oder unmittelbar über die erste Anschlusskontakteinrichtung 8a mit der zumindest einen Signalaufbereitung- und/oder Steuereinheit 9 verbunden werden. Umgekehrt bedeutet dies, dass das zumindest eine Verstärkermodul 10 über seinen zweiten Anschlussport 12b mittelbar oder unmittelbar über die zweite Anschlusskontakteinrichtung 8b mit zumindest einem Strahler oder Strahlerpaar 4 zur Signalübertragung verbunden werden kann.

Die Breitenerstreckung (Erstreckung verläuft insbesondere parallel zur Reflektorfläche) der Gehäuserückseite 2b ist zumindest um 10%, vorzugsweise um zumindest 20%, 30%, 40%, 50%, 60%, 70%, 80% oder 90% schmäler als die Breitenerstreckung der Gehäusevorderseite 2a oder der maximalen Breitenerstreckung des gesamten Antennengehäuses 2.

Die Verstärkermodule 10 und/oder die zumindest eine Spannungsversorgungseinrichtung 20 und/oder die zumindest eine Signalaufbereitungs- und/oder Steuereinheit 9 sind vorzugsweise an dem Bereich der ersten und/oder zweiten seitlichen Gehäuseseite 2c, 2d angeordnet, der sich gegenüber der Breite der Gehäusevorderseite 2a bereits verjüngt hat.

Die Gehäuserückseite 2b und zumindest Teile der ersten und zweiten seitlichen Gehäuseseite 2c, 2d des Antennengehäuses 2 bestehen aus Metall oder einer Metalllegierung. Sie können auch aus einem Kunststoff bestehen wie die Gehäusevorderseite 2a des Antennengehäuses.

Der erste und der zweite Anschlussports 12a, 12b der jeweiligen Verstärkermodule 10 sind um vorzugsweise mehr als 1 cm, um mehr als 2 cm, 3 cm, 4 cm oder vorzugsweise um mehr als 5 cm voneinander beabstandet am Gehäuse des Verstärkermoduls 10 angeordnet.

Der erste Anschlussport 12a ist insbesondere galvanisch mit der ersten Anschlusskontakteinrichtung 8a durch die Steckverbindung verbunden. Bevorzugt ist ein Innenleiter des ersten Anschlussports 12a mit einem Innenleiteraufnahmeelement in der ersten Anschlusskontakteinrichtung 8a galvanisch verbunden. Der erste Anschlussport 12a kann auch mehrere Innenleiter aufweisen, die in mehrere Innenleiteraufnahmeelemente in der ersten Anschlusskontakteinrichtung 8a eingreifen können. Natürlich könnte der zumindest eine Innenleiter auch in der ersten Anschlusskontakteinrichtung 8a ausgebildet sein und galvanisch mit zumindest einem Innenleiteraufnahmeelement in dem ersten Anschlussport 12a verbunden sein. Selbiges kann auch für den zweiten Anschlussport 12b im Zusammenspiel mit der zweiten Anschlusskontakteinrichtung 8b gelten.

## Patentansprüche

1. Mobilfunkantenne (1) zur Befestigung an einem mast- oder wandförmigen Träger mit zumindest zwei austauschbaren Verstärkermodulen mit den folgenden Merkmalen:
- zumindest ein Antennengehäuse (2) mit einer Gehäusevorderseite (2a), einer Gehäuserückseite (2b) und einer ersten und einer dazu gegenüberliegenden zweiten seitlichen Gehäuseseite (2c, 2d), die zusammen eine umlaufende Gehäusewand bilden, wobei sich das Antennengehäuse (2) entlang einer Längsachse (3) erstreckt;
- in dem Antennengehäuse (2) sind mehrere Strahler oder Strahlerpaare (4) vor zumindest einem Reflektor (5) beabstandet angeordnet;
- zumindest zwei Verstärkermodule (10) mit jeweils einem ersten Anschlussport (12a) und einem zweiten Anschlussport (12b);
- die Verstärkermodule (10) sind an der Gehäuserückseite (2b) und/oder an der ersten oder zweiten seitlichen Gehäuseseite (2c, 2d) außerhalb des Antennengehäuses (2) an diesem befestigt oder montiert;
- zumindest eine Signalaufbereitungs- und/oder Steuereinheit (9);
- die zumindest eine Signalaufbereitungs- und/oder Steuereinheit (9) ist in einem von den Verstärkermodulen (10) separierten Gehäuse in oder an dem Antennengehäuse (2) der Mobilfunkantenne (1) untergebracht;
- die zumindest eine Signalaufbereitungs- und/oder Steuereinheit (9) umfasst zumindest eine digitale Schnittstelle zu einer Basisbandeinheit oder zum Mobilfunknetz und Schnittstellen zu den separaten Verstärkermodulen (10);
- der erste Anschlussport (12a) und der zweite Anschlussport (12b) der zumindest beiden Verstärkermodule (10) sind über zugeordnete Anschlussöffnungen (7a, 7b) im Antennengehäuse (2) mit zugeordneten ersten und zweiten Anschlusskontakteinrichtungen (8a, 8b) durch eine Steckverbindung verbunden.

2. Mobilfunkantenne (1) nach Anspruch 1, **gekennzeichnet durch** die folgenden Merkmale:
- über den ersten und/oder zweiten Anschlussport (12a, 12b) der zumindest zwei Verstärkermodule (10) ist zu der jeweiligen ersten und/oder zweiten Anschlusskontakteinrichtung (8a, 8b) eine Gleichspannung und/oder ein Signal mit einem Gleichspannungsanteil übertragbar;
- der erste Anschlussport (12a) ist galvanisch mit der ersten Anschlusskontakteinrichtung (8a) durch die Steckverbindung verbunden und/oder der zweite Anschlussport (12b) ist galvanisch mit der zweiten Anschlusskontakteinrichtung (8b) durch die Steckverbindung verbunden;
oder
- der erste Anschlussport (12a) weist einen oder mehrere Innenleiter auf, die mit einem Innenleiteraufnahmeelement oder mehreren Innenleiteraufnahmeelementen in der ersten Anschlusskontakteinrichtung (8a) galvanisch verbunden ist; oder
der erste Anschlussport (12a) weist ein Innenleiteraufnahmeelement oder mehrere Innenleiteraufnahmeelemente auf, die mit einem Innenleiter oder mehreren Innenleitern in der ersten Anschlusskontakteinrichtung (8a) galvanisch verbunden ist;
und/oder
der zweite Anschlussport (12b) weist einen oder mehrere Innenleiter auf, die mit einem Innenleiteraufnahmeelement oder mehreren Innenleiteraufnahmeelementen in der zweiten Anschlusskontakteinrichtung (8b) galvanisch verbunden ist; oder
der zweite Anschlussport (12b) weist ein Innenleiteraufnahmeelement oder mehrere Innenleiteraufnahmeelemente auf, die mit einem Innenleiter oder mehreren Innenleitern in der zweiten Anschlusskontakteinrichtung (8b) galvanisch verbunden ist.

3. Mobilfunkantenne (1) nach einem der vorherigen Ansprüche, **gekennzeichnet durch** die folgenden Merkmale:
- in Draufsicht auf einen Querschnitt durch das Antennengehäuse (2) verläuft die erste und/oder die zweite seitliche Gehäuseseite (2c, 2d) in zumindest einem Teilbereich von der Gehäusevorderseite (2a) zur Gehäuserückseite (2b) mit einer Komponente in Richtung der gegenüberliegenden seitlichen Gehäuseseite (2c, 2d), wodurch die Gehäuserückseite (2b) eine kleinere Breite aufweist als die Gehäusevorderseite (2a);
- die zumindest beiden Anschlussöffnungen (7a, 7b) für jedes der zumindest zwei Verstärkermodule (10) sind an zwei unterschiedlichen Seitensegmenten der ersten und/oder zweiten seitlichen Gehäuseseite (4c, 4d) angeordnet.

4. Mobilfunkantenne (1) nach Anspruch 3, **gekennzeichnet durch** die folgenden Merkmale:
- in Draufsicht auf einen Querschnitt durch das Antennengehäuse (2) ist die erste und/oder die zweite seitliche Gehäuseseite (2c, 2d) stufenförmig ausgebildet und umfasst jeweils n Seitensegmente (2₁, 2_{2,} 2ₙ) mit n ≥ 2 oder n ≥ 3;
- das erste Seitensegment (2₁) der ersten und/oder zweiten seitlichen Gehäuseseite (2c, 2d) schließt sich an der Gehäusevorderseite (2a) an und das n-te Seitensegment (2ₙ) der ersten und der zweiten seitlichen Gehäuseseite (2c, 2d) schließt sich an die Gehäuserückseite (2b) an;
- ein Abstand zwischen den jeweiligen Seitensegmenten (2₁, 2_{2,} 2ₙ) der ersten und zweiten seitlichen Gehäuseseite (2c, 2d) verringert sich sukzessive vom ersten Seitensegment (2₁) hin zum n-ten Seitensegment (2ₙ);
- die erste und/oder zweite seitliche Gehäuseseite (2c, 2d) weist an zwei unterschiedlichen Seitensegmenten (2₁, 2_{2,} 2ₙ) für das zumindest eine Verstärkermodul (10) die zumindest beiden Anschlussöffnungen (7a, 7b) auf, mit den zugeordneten ersten und zweiten Anschlusskontakteinrichtungen (8a, 8b).

5. Mobilfunkantenne (1) nach einem der vorherigen Ansprüche, **gekennzeichnet durch** die folgenden Merkmale:
- die zumindest zwei Verstärkermodule (10) sind über ihren ersten Anschlussport (12a) mittelbar oder unmittelbar über die jeweilige erste Anschlusskontakteinrichtung (8a) mit der zumindest einen Signalaufbereitungs- und/oder Steuereinheit (9) zur Signalübertragung verbunden;
- die zumindest zwei Verstärkermodule (10) sind über ihren zweiten Anschlussport (12b) mittelbar oder unmittelbar über die jeweilige zweite Anschlusskontakteinrichtung (8b) mit zumindest einem Strahler oder Strahlerpaar (4) zur Signalübertragung verbunden.

6. Mobilfunkantenne (1) nach einem der vorherigen Ansprüche, **gekennzeichnet durch** die folgenden Merkmale:
- mehrere Phasenschieber, wobei zumindest eines der Verstärkermodule (10) mittelbar über zumindest einen Phasenschieber mit mehreren Strahlern oder Strahlerpaaren (4) zur Signalübertragung verbunden ist;
- einer inneren Gehäuseeinrichtung (30), die innerhalb des Antennengehäuses (2) angeordnet ist;
- die innere Gehäuseeinrichtung (30) ist an einer Rückseite (5a) des zumindest einen Reflektors (5) angeordnet und bildet zusammen mit ihren beiden, sich gegenüberliegenden Seitenwänden (30a, 30b), ihrer Rückwand (30c) und der Rückseite (5a) des Reflektors (5) einen Aufnahmeraum (31);
- die Phasenschieber sind in diesem Aufnahmeraum (31) angeordnet.

7. Mobilfunkantenne (1) nach einem der vorherigen Ansprüche, **gekennzeichnet durch** die folgenden Merkmale:
- zumindest eines der Verstärkermodule (10) bildet einen Sendeverstärker, der Mobilfunksignale verstärkt, die über die Strahler oder Strahlerpaare (4) ausgesendet werden; und/oder
- zumindest eines der Verstärkermodule (10) bildet einen Empfangsverstärker, der Mobilfunksignale verstärkt, die über die Strahler oder Strahlerpaare (4) empfangen werden;
oder
zumindest ein Empfangsverstärker ist in der Signalaufbereitungs- und/oder Steuereinheit (9) zur Verstärkung der über die Strahler oder Strahlerpaare (4) empfangenen Mobilfunksignale integriert.

8. Mobilfunkantenne (1) nach einem der vorherigen Ansprüche, **gekennzeichnet durch** die folgenden Merkmale:
- zumindest eines der Verstärkermodule (10) ist mit Blick auf die erste und/oder die zweite seitliche Gehäuseseite (2c, 2d) auf das Antennengehäuse (2) aufsteckbar oder von diesem abziehbar;
- der erste oder der zweite Anschlussport (7a, 7b) zumindest eines der Verstärkermodule (10) ist in Einsteckrichtung vorlaufend gegenüber dem zweiten oder ersten Anschlussport (7b, 7a) angeordnet.

9. Mobilfunkantenne (1) nach Anspruch 8, **gekennzeichnet durch** die folgenden Merkmale:
- der erste oder zweite Anschlussport (7a, 7b) von zumindest einem Verstärkermodul (10) ist näher oder gleich nah an der Gehäusevorderseite (2a) angeordnet als bzw. wie der zweite oder erste Anschlussport (7b, 7a) von dem zumindest einen Verstärkermodul (10); und/oder
- der erste und der zweite Anschlussport (7a, 7b) von zumindest einem Verstärkermodul (10) sind in Richtung der Längsachse (3) versetzt zueinander angeordnet.

10. Mobilfunkantenne (1) nach einem der vorherigen Ansprüche, **gekennzeichnet durch** die folgenden Merkmale:
- zumindest eines der Verstärkermodule (10) umfasst ein Verstärkergehäuse (10a) und ein Filtergehäuse (10b);
- in dem Verstärkergehäuse (10a) ist ein Leistungsverstärker angeordnet;
- in dem Filtergehäuse (10b) ist ein Hochfrequenzfilter, insbesondere ein Hochfrequenzfilter in Cavity-Bauweise, angeordnet;
- über eine Signalleitung sind das Filtergehäuse (10a) und das Verstärkergehäuse (10b) miteinander zur Signalübertragung verbunden bzw. gekoppelt.

11. Mobilfunkantenne (1) nach Anspruch 10, **gekennzeichnet durch** die folgenden Merkmale:
- das zumindest eine Verstärkermodul (10) ist L-förmig; und/oder
- das zumindest eine Verstärkermodul (10a) ist mit einem Bewegungsvektor, der ausschließlich senkrecht oder der mit einer Komponente überwiegend senkrecht zur ersten oder zweiten seitlichen Gehäuseseite (2c, 2d) verläuft und/oder der parallel oder mit einer Komponente überwiegend parallel zur Reflektorebene verläuft, auf das Antennengehäuse (2) aufsteckbar oder von diesem abziehbar; und/oder
- in Draufsicht auf die Gehäusevorderseite (2a) des Antennengehäuses (2) ist das zumindest eine Verstärkermodul (10) im montierten Zustand überwiegend oder vollständig durch die Gehäusevorderseite (2a) verdeckt.

12. Mobilfunkantenne (1) nach einem der vorherigen Ansprüche, **gekennzeichnet durch** die folgenden Merkmale:
- zumindest eines der Verstärkermodule (10) umfasst eine Arretiereinrichtung (17), die an diesem befestigt ist;
- die Arretiereinrichtung (17) greift im montierten Zustand in eine Arretieröffnung ein, die in der ersten oder zweiten seitlichen Gehäuseseite (2c, 2d) ausgebildet ist und verhindert, dass das zumindest eine Verstärkermodul (10) ohne Betätigung der Arretiereinrichtung (17) abziehbar ist.

13. Mobilfunkantenne (1) nach einem der vorherigen Ansprüche, **gekennzeichnet durch** die folgenden Merkmale:
- zumindest eines der Verstärkermodule (10) umfasst ein Anzeigeelement, insbesondere in Form einer LED;
- das Anzeigeelement ist von außerhalb des Antennengehäuses (2) sichtbar;
- das zumindest eine Verstärkermodul (10) oder die zumindest eine Signalaufbereitungs- und/oder Steuereinheit (9) ist dazu ausgebildet, das Anzeigeelement derart anzusteuern, dass dieses einen Defekt des zumindest einen Verstärkermoduls (10) visuell signalisiert.

14. Mobilfunkantenne (1) nach einem der vorherigen Ansprüche, **gekennzeichnet durch** die folgenden Merkmale:
- zumindest eine Spannungsversorgungseinrichtung (20), wobei die zumindest eine Spannungsversorgungseinrichtung (20) an einem oder mehreren Seitensegmenten (2₁, 2_{2,} 2ₙ) der ersten oder zweiten seitlichen Gehäuseseite anliegt (2c, 2d); und/oder
- die Signalaufbereitungs- und/oder Steuereinheit (9) liegt an einem oder mehreren Seitensegmenten (2₁, 2_{2,} 2ₙ) der ersten und/oder zweiten seitlichen Gehäuseseite (2c, 2d) an und/oder auf der Gehäuserückseite (2b) des Antennengehäuses (2) auf.

15. Mobilfunkantenne (1) nach Anspruch 14, **gekennzeichnet durch** die folgenden Merkmale:
- die zumindest eine Spannungsversorgungseinrichtung (20) ist mit einem Bewegungsvektor, der ausschließlich senkrecht oder mit einer Komponente überwiegend senkrecht zur ersten oder zweiten seitlichen Gehäuseseite (2c, 2d) verläuft und/oder der parallel oder mit einer Komponente überwiegend parallel zur Reflektorebene verläuft, auf das Antennengehäuse (2) aufsteckbar oder von diesem abziehbar; und/oder
- die Signalaufbereitungs- und/oder Steuereinheit (9) liegt in Draufsicht auf die Gehäuserückseite (2b) auf der zumindest einen Spannungsversorgungseinrichtung (20) auf und/oder überlappt diese vollständig oder zumindest teilweise; und/oder
- die zumindest eine Spannungsversorgungseinrichtung (20) und die zumindest eine Signalaufbereitungs- und/oder Steuereinheit (9) sind im montierten Zustand der Mobilfunkantenne (1) an dem Ende der Mobilfunkantenne (1) angeordnet, das näher zum Boden hin ausgerichtet ist.

## Claims

1. A mobile communications antenna (1) for mounting on a mast-like or wall-like support with at least two interchangeable amplifier modules, having the following features:
- at least one antenna housing (2) with a housing front side (2a), a housing rear side (2b) and a first lateral housing side and a second lateral housing side (2c, 2d) opposite to the first housing side, which together form an enveloping housing wall, wherein the antenna housing (2) extends along a longitudinal axis (3);
- in the antenna housing (2), a plurality of radiating elements or radiating element pairs (4) are positioned spaced apart in front of at least one reflector (5);
- at least two amplifier modules (10), with a respective first connection port (12a) and a second connection port (12b);
- the amplifier modules (10) are fastened to or mounted on the exterior of the antenna housing (2), at the housing rear side (2b) and/or at the first or second lateral housing side (2c, 2d);
- at least one signal processing and/or control unit (9);
- the at least one signal processing and/or control unit (9) is disposed in a housing, which is separate from the amplifier modules (10), in or on the antenna housing (2) of the mobile communications antenna (1);
- the at least one signal processing and/or control unit (9) comprises at least one digital interface to a baseband unit or to the mobile communications network and interfaces to the separate amplifier modules (10);
- the first connection port (12a) and the second connection port (12b) of the at least two amplifier modules (10) are connected via associated connection openings (7a, 7b) in the antenna housing (2) to associated first and second connection contact devices (8a, 8b) via a plug-in connection.

2. The mobile communications antenna (1) of claim 1, **characterised by** the following features:
- a DC voltage and or a signal with a DC voltage component is transmittable via the first and/or second connection port (12a, 12b) of the at least two amplifier modules (10) to the respective first and/or second connection contact device (8a, 8b);
- the first connection port (12a) is galvanically connected to the first connection contact device (8a) via the plug-in connection and/or
the second connection port (12b) is galvanically connected to the second connection contact device (8b) via the plug-in connection;
or
- the first connection port (12a) has one or more inner conductors, which are galvanically connected to an inner conductor receiving element or a plurality of inner conductor receiving elements in the first connection contact device (8a); or the first connection port (12a) has an inner conductor receiving element or a plurality of inner conductor receiving elements, which are galvanically connected to an inner conductor or a plurality of inner conductors in the first connection contact device (8a);
and/or
the second connection port (12b) has one or more inner conductors, which are galvanically connected to an inner conductor receiving element or a plurality of inner conductor receiving elements in the second connection contact device (8b); or
the second connection port (12b) has an inner conductor receiving element or a plurality of inner conductor receiving elements, which are galvanically connected to an inner conductor or a plurality of inner conductors in the second connection contact device (8b).

3. The mobile communications antenna (1) according to any one of the preceding claims, **characterised by** the following features:
- in a plan view of a cross section through the antenna housing (2) the first and/or the second lateral housing side (2c, 2d) extend, in at least one portion, from the housing front side (2a) to the housing rear side (2b) with a component directed towards the opposite lateral housing side (2c, 2d), whereby the housing rear side (2b) has a smaller width than the housing front side (2a);
- the at least two connection openings (7a, 7b) for each of the at least two amplifier modules (10) are arranged on two different side segments of the first and/or second lateral housing side (4c, 4d).

4. The mobile communications antenna (1) according to claim 3, **characterised by** the following features:
- in plan view of a cross section through the antenna housing (2), the first and/or the second lateral housing side (2c, 2d) are step-shaped and each includes n side segments (2₁, 2_{2,} 2ₙ) with n ≥ 2 or n ≥ 3;
- the first side segment (2₁) of the first and/or second lateral housing side (2c, 2d) adjoins the housing front side (2a), and the nth side segment (2ₙ) of the first and the second lateral housing side (2c, 2d) adjoins the housing rear side (2b);
- a distance between the respective side segments (2₁, 2_{2,} 2ₙ) of the first and second lateral housing sides (2c, 2d) decreases gradually from the first side segment (2₁) to the nth side segment (2ₙ);
- the first and/or second lateral housing side (2c, 2d) have, on two different side segments (2₁, 2_{2,} 2ₙ), for the at least one amplifier module (10) the at least two connection openings (7a, 7b), with the associated first and second connection contact devices (8a, 8b).

5. The mobile communications antenna (1) according to any one of the preceding claims, **characterised by** the following features:
- the at least two amplifier modules (10) are indirectly or directly connected via their first connection port (12a) via the respective first connection contact device (8a) to the at least one signal processing and/or control unit (9) for signal transmission;
- the at least two amplifier modules (10) are connected via their second connection port (12b) indirectly or directly via the respective second connection contact device (8b) to at least one radiating element or radiating element pair (4) for signal transmission.

6. The mobile communications antenna (1) according to any one of the preceding claims, **characterised by** the following features:
- a plurality of phase shifters, wherein at least one of the amplifier modules (10) is indirectly connected via at least one phase shifter to a plurality of radiating elements or radiating element pairs (4) for signal transmission;
- an inner housing device (30) which is disposed within the antenna housing (2);
- the inner housing device (30) is arranged on a rear side (5a) of the at least one reflector (5) and forms, together with its two opposite side walls (30a, 30b), its rear wall (30c) and the rear side (5a) of the reflector (5), a receiving space (31);
- the phase shifters are arranged in this receiving space (31).

7. The mobile communications antenna (1) according to any one of the preceding claims, **characterised by** the following features:
- at least one of the amplifier modules (10) forms a transmission amplifier which amplifies mobile communication signals which are transmitted via the radiating elements or radiating element pairs (4); and/or
- at least one of the amplifier modules (10) forms a receiver amplifier which amplifies mobile communication signals received via the radiating elements or radiating element pairs (4);
or
at least one receiving amplifier is integrated in the signal processing and/or control unit (9) for amplifying the mobile communication signals received via the radiating elements or radiating element pairs (4).

8. The mobile communications antenna (1) according to any one of the preceding claims, **characterised by** the following features:
- at least one of the amplifier modules (10) may be plugged into or removed from the antenna housing (2) when viewed towards the first and/or the second lateral housing side (2c, 2d);
- the first or the second connection port (7a, 7b) of at least one of the amplifier modules (10) is arranged leading in the insertion direction opposite the second or first connection port (7b, 7a).

9. The mobile communications antenna (1) according to claim 8, **characterised by** the following features:
- the first or second connection port (7a, 7b) of at least one amplifier module (10) is arranged closer to or at the same distance from the housing front side (2a) than or as the second or first connection port (7b, 7a) of the at least one amplifier module (10); and/or
- the first and the second connection port (7a, 7b) of at least one amplifier module (10) are offset from each other in the direction of the longitudinal axis (3).

10. The mobile communications antenna (1) according to any one of the preceding claims, **characterised by** the following features:
- at least one of the amplifier modules (10) comprises an amplifier housing (10a) and a filter housing (10b);
- a power amplifier is arranged in the amplifier housing (10a);
- a high-frequency filter, in particular a high-frequency filter with a cavity design, is arranged in the filter housing (10b);
- the filter housing (10a) and the amplifier housing (10b) are interconnected or coupled together for signal transmission via a signal line.

11. The mobile communications antenna (1) according to claim 10, **characterised by** the following features:
- the at least one amplifier module (10) is L-shaped; and/or
- the at least one amplifier module (10a) is pluggable into or removable from the antenna housing (2) with a motion vector which is exclusively perpendicular to, or has a component predominantly perpendicular to, the first or second lateral housing side (2c, 2d) and/or which is parallel to, or has a component predominantly parallel to the reflector plane; and/or
- in a plan view on the housing front side (2a) of the antenna housing (2), the at least one amplifier module (10) in the mounted state is predominantly or completely covered by the housing front side (2a).

12. The mobile communications antenna (1) according to any one of the preceding claims, **characterised by** the following features:
- at least one of the amplifier modules (10) comprises a locking device (17) which is fastened thereto;
- in the mounted state, the locking device (17) engages in a locking opening which is formed in the first or second lateral housing side (2c, 2d) and prevents the at least one amplifier module (10) from being removed without actuation of the locking device (17).

13. The mobile communications antenna (1) according to any one of the preceding claims, **characterised by** the following features:
- at least one of the amplifier modules (10) comprises a display element, in particular in the form of an LED;
- the display element is visible from outside the antenna housing (2);
- the at least one amplifier module (10) or the at least one signal processing and/or control unit (9) is adapted to control the display element such that it visually signals a defect of the at least one amplifier module (10).

14. The mobile communications antenna (1) according to any one of the preceding claims, **characterised by** the following features:
- at least one power supply device (20), wherein the at least one power supply device (20) rests on one or more side segments (2₁, 2_{2,} 2ₙ) of the first or second lateral housing side (2c, 2d); and/or
- the signal processing and/or control unit (9) rests on one or more side segments (2₁, 2_{2,} 2ₙ) of the first and/or second lateral housing side (2c, 2d) and/or on the housing rear side (2b) of the antenna housing (2).

15. The mobile communications antenna (1) according to claim 14, **characterised by** the following features:
- the at least one power supply device (20) is pluggable into or is removable from the antenna housing (2) with a motion vector which is exclusively perpendicular to, or has a component predominantly perpendicular to, the first or second lateral housing side (2c, 2d) and/or or which is parallel to, or has a component predominantly parallel to, the reflector plane; and/or
- the signal processing and/or control unit (9) rests, in plan view of the housing rear side (2b), on the at least one power supply device (20) and/or overlaps the same completely or at least partially; and/or
- in the assembled state of the mobile communications antenna (1), the at least one power supply device (20) and the at least one signal processing and/or control unit (9) are arranged at the end of the mobile communications antenna (1) which is oriented closer to the ground.

## Revendications

1. Antenne radio mobile (1) destinée à être fixée à un support en forme de mât ou de paroi, comprenant au moins deux modules amplificateurs remplaçables, et présentant les particularités suivantes :
- au moins un boîtier d'antenne (2) pourvu d'une face avant (2a), d'une face arrière (2b) et de première et deuxième faces latérales (2c, 2d), opposées l'une à l'autre, lesquelles forment une paroi circonférentielle du boîtier, ledit boîtier d'antenne (2) s'étendant le long d'un axe longitudinal (3) ;
- plusieurs éléments rayonnants ou paires d'éléments rayonnants (4) sont disposés dans le boîtier d'antenne (2) en étant espacés devant au moins un réflecteur (5) ;
- au moins deux modules amplificateurs (10) présentant chacun un premier port de connexion (12a) et un deuxième port de connexion (12b) ;
- les modules amplificateurs (10) sont fixés ou montés sur l'extérieur du boîtier d'antenne (2), à savoir sur sa face arrière (2b) et/ou sur sa première ou deuxième face latérale (2c, 2d) ;
- au moins une unité de préparation de signal et/ou de commande (9) ;
- l'au moins une unité de préparation de signal et/ou de commande (9) est installée dans ou sur le boîtier (2) de l'antenne radio mobile (1), et ce dans un boîtier séparé des modules amplificateurs (10) ;
- l'au moins une unité de préparation de signal et/ou de commande (9) comprend au moins une interface numérique vers une unité en bande de base ou un réseau radio mobile et des interfaces vers les modules amplificateurs (10) séparés ;
- le premier port de connexion (12a) et le deuxième port de connexion (12b) des au moins deux modules amplificateurs (10) sont reliés, par le biais d'ouvertures de connexion (7a, 7b) associées dans le boîtier d'antenne (2), avec des premier et deuxième dispositifs de contact à borne (8a, 8b) associés grâce à une liaison par enfichage.

2. Antenne radio mobile (1) selon la revendication 1, **caractérisée par** les particularités suivantes :
- les premier et/ou deuxième ports de connexion (12a, 12b) des au moins deux modules amplificateurs (10) permettent de transmettre au premier et/ou au deuxième dispositif de contact à borne (8a, 8b) respectif une tension continue et/ou un signal présentant une composante de tension continue ;
- le premier port de connexion (12a) est relié galvaniquement au premier dispositif de contact à borne (8a) par une liaison par enfichage, et/ou
le deuxième port de connexion (12b) est relié galvaniquement au deuxième dispositif de contact à borne (8b) par ladite liaison par enfichage ;
ou
- le premier port de connexion (12a) présente un ou plusieurs conducteurs internes qui sont reliés galvaniquement à un ou plusieurs éléments de réception de conducteur interne dans le premier dispositif de contact à borne (8a) ; ou
le premier port de connexion (12a) présente un ou plusieurs éléments de réception de conducteur interne qui sont reliés galvaniquement à un ou plusieurs conducteurs internes dans le premier dispositif de contact à borne (8a) ;
et/ou
le deuxième port de connexion (12b) présente un ou plusieurs conducteurs internes qui sont reliés galvaniquement à un ou plusieurs éléments de réception de conducteur interne dans le deuxième dispositif de contact à borne (8b) ;
ou
le deuxième port de connexion (12b) présente un ou plusieurs éléments de réception de conducteur interne qui sont reliés galvaniquement à un ou plusieurs conducteurs internes dans le deuxième dispositif de contact à borne (8b).

3. Antenne radio mobile (1) selon l'une des revendications précédentes, **caractérisée par** les particularités suivantes :
- selon une vue de dessus en coupe du boîtier d'antenne (2), sa première et/ou sa deuxième face latérale (2c, 2d) se prolongent, dans au moins une zone partielle, de la face avant (2a) vers la face arrière (2b) en présentant une composante dirigée vers la face latérale (2c, 2d) opposée, moyennant quoi la face arrière (2b) présente une plus petite largeur que la face avant (2a) ;
- les au moins deux ouvertures de connexion (7a, 7b) destinées à chacun des au moins deux modules amplificateurs (10) sont disposées sur deux segments latéraux différents de la première et/ou de la deuxième face latérale (4c, 4d) du boîtier.

4. Antenne radio mobile (1) selon la revendication 3, **caractérisée par** les particularités suivantes :
- selon une vue de dessus en coupe du boîtier d'antenne (2), sa première et/ou sa deuxième face latérale (2c, 2d) sont conçues en forme de gradins et comprennent chacune n segments latéraux (2₁, 2_{2,} 2ₙ), où n ≥ 2 ou n ≥ 3 ;
- le premier segment latéral (2₁) des première et/ou deuxième faces latérales (2c, 2d) du boîtier est rattaché à la face avant (2a) du boîtier et le n-ième segment latéral (2ₙ) des première et deuxième faces latérales (2c, 2d) du boîtier est rattaché à la face arrière (2b) du boîtier ;
- l'écart entre les divers segments latéraux (2₁, 2_{2,} 2ₙ) des première et deuxième faces latérales (2c, 2d) du boîtier diminue successivement, du premier segment latéral (2₁) jusqu'au n-ième segment latéral (2ₙ) ;
- les première et/ou deuxième faces latérales (2c, 2d) du boîtier présentent, sur deux segments latéraux différents (2₁, 2_{2,} 2ₙ) destinés à l'au moins un module amplificateur (10), les au moins deux ouvertures de connexion (7a, 7b) comportant les premier et deuxième dispositifs de contact à borne (8a, 8b) associés.

5. Antenne radio mobile (1) selon l'une des revendications précédentes, **caractérisée par** les particularités suivantes :
- les au moins deux modules amplificateurs (10) sont reliés, par le biais de leur premier port de connexion (12a) de façon indirecte ou directe par le biais du premier dispositif de contact à borne (8a) correspondant, à l'au moins une unité de préparation de signal et/ou de commande (9) en vue d'une transmission de signaux ;
- les au moins deux modules amplificateurs (10) sont reliés, par le biais de leur deuxième port de connexion (12b) de façon indirecte ou directe par le biais du deuxième dispositif de contact à borne (8b) correspondant, à l'au moins un élément rayonnant ou à la paire d'éléments rayonnants (4) en vue d'une transmission de signaux.

6. Antenne radio mobile (1) selon l'une des revendications précédentes, **caractérisée par** les particularités suivantes :
- plusieurs déphaseurs, au moins un des modules amplificateurs (10) étant relié indirectement, par le biais d'au moins un déphaseur, à plusieurs éléments rayonnants ou paires d'éléments rayonnants (4) en vue d'une transmission de signaux ;
- un dispositif de boîtier interne (30) disposé à l'intérieur du boîtier d'antenne (2) ;
- le dispositif de boîtier interne (30) est disposé sur une face arrière (5a) de l'au moins un réflecteur (5) et forme un logement (31) conjointement avec ses deux parois latérales opposées (30a, 30b), sa paroi arrière (30c) et la face arrière (5a) du réflecteur (5) ;
- les déphaseurs sont disposés dans ledit logement (31).

7. Antenne radio mobile (1) selon l'une des revendications précédentes, **caractérisée par** les particularités suivantes :
- au moins un des modules amplificateurs (10) forme un amplificateur d'émission qui amplifie les signaux radio mobiles émis par les éléments rayonnants ou paires d'éléments rayonnants (4) ; et/ou
- au moins un des modules amplificateurs (10) forme un amplificateur de réception qui amplifie les signaux radio mobiles reçus par les éléments rayonnants ou paires d'éléments rayonnants (4) ;
ou
au moins un amplificateur de réception est intégré dans l'unité de préparation de signal et/ou de commande (9) afin d'amplifier les signaux radio mobiles reçus par les éléments rayonnants ou paires d'éléments rayonnants (4).

8. Antenne radio mobile (1) selon l'une des revendications précédentes, **caractérisée par** les particularités suivantes :
- au moins un des modules amplificateurs (10), selon une vue de face des première et/ou deuxième faces latérales (2c, 2d) du boîtier, peut être enfiché sur le boîtier d'antenne (2) ou en être ôté ;
- le premier ou le deuxième port de connexion (7a, 7b) d'au moins un des modules amplificateurs (10) est disposé, dans le sens de l'enfichage, plus avant que le deuxième ou le premier port de connexion (7b, 7a).

9. Antenne radio mobile (1) selon la revendication 8, **caractérisée par** les particularités suivantes :
- le premier ou deuxième port de connexion (7a, 7b) d'au moins un module amplificateur (10) est disposé plus proche ou aussi proche de la face avant (2a) du boîtier que le deuxième ou le premier port de connexion (7b, 7a) de l'au moins un module amplificateur (10) ; et/ou
- le premier et le deuxième port de connexion (7a, 7b) d'au moins un module amplificateur (10) sont en décalage l'un par rapport à l'autre dans le sens de l'axe longitudinal (3).

10. Antenne radio mobile (1) selon l'une des revendications précédentes, **caractérisée par** les particularités suivantes :
- au moins un des modules amplificateurs (10) comprend un boîtier d'amplificateur (10a) et un boîtier de filtre (10b) ;
- un amplificateur de puissance est disposé dans le boîtier d'amplificateur (10a) ;
- un filtre haute fréquence est disposé dans le boîtier de filtre (10b), notamment un filtre haute fréquence de type à cavité ;
- le boîtier de filtre (10a) et le boîtier d'amplificateur (10b) sont reliés ou couplés l'un à l'autre par un circuit d'acheminement de signaux en vue d'une transmission de signaux.

11. Antenne radio mobile (1) selon la revendication 10, **caractérisée par** les particularités suivantes :
- l'au moins un module amplificateur (10) est en forme de L ; et/ou
- l'au moins un module amplificateur (10a) peut être enfiché sur le boîtier d'antenne (2) ou en être ôté selon un vecteur de mouvement qui est exclusivement perpendiculaire, ou majoritairement perpendiculaire par une composante, à la première ou à la deuxième face latérale (2c, 2d) du boîtier et/ou qui est parallèle, ou majoritairement parallèle par une composante, au plan du réflecteur ; et/ou
- selon une vue de dessus de la face avant (2a) du boîtier d'antenne (2), l'au moins un module amplificateur (10), à l'état monté, est masqué majoritairement ou totalement par la face avant (2a).

12. Antenne radio mobile (1) selon l'une des revendications précédentes, **caractérisée par** les particularités suivantes :
- au moins un des modules amplificateurs (10) comprend un dispositif de blocage (17) fixé sur celui-ci ;
- le dispositif de blocage (17) s'enclenche, à l'état monté, dans une ouverture de fixation ménagée dans la première ou la deuxième face latérale (2c, 2d) du boîtier et empêche que l'au moins un module amplificateur (10) ne puisse être ôté sans que le dispositif de blocage (17) n'ait été actionné.

13. Antenne radio mobile (1) selon l'une des revendications précédentes, **caractérisée par** les particularités suivantes :
- au moins un des modules amplificateurs (10) comprend un élément indicateur, notamment sous la forme d'une LED ;
- l'élément indicateur est visible depuis l'extérieur du boîtier d'antenne (2) ;
- l'au moins un module amplificateur (10) ou l'au moins une unité de préparation de signal et/ou de commande (9) est conçu(e) pour commander l'élément indicateur de telle façon qu'une défaillance de l'au moins un module amplificateurs (10) soit signalé visuellement.

14. Antenne radio mobile (1) selon l'une des revendications précédentes, **caractérisée par** les particularités suivantes :
- au moins un dispositif d'alimentation en tension (20), ledit au moins un dispositif d'alimentation en tension (20) étant en appui sur un ou plusieurs segments latéraux (2₁, 2_{2,} 2ₙ) de la première ou deuxième face latérale (2c, 2d) du boîtier ; et/ou
- l'unité de préparation de signal et/ou de commande (9) est en appui sur un ou plusieurs segments latéraux (2₁, 2_{2,} 2ₙ) des première et/ou deuxième faces latérales (2c, 2d) du boîtier et/ou repose sur la face arrière (2b) du boîtier d'antenne (2).

15. Antenne radio mobile (1) selon la revendication 14, **caractérisée par** les particularités suivantes :
- l'au moins un dispositif d'alimentation en tension (20) peut être enfiché sur le boîtier d'antenne (2) ou en être ôté selon un vecteur de mouvement qui est exclusivement perpendiculaire, ou majoritairement perpendiculaire par une composante, à la première ou à la deuxième face latérale (2c, 2d) du boîtier et/ou qui est parallèle, ou majoritairement parallèle par une composante, au plan du réflecteur ; et/ou
- l'unité de préparation de signal et/ou de commande (9) repose, selon une vue de dessus de la face arrière (2b) du boîtier, sur l'au moins un dispositif d'alimentation en tension (20) et/ou est totalement ou au moins partiellement en chevauchement avec celui-ci ; et/ou
- l'au moins un dispositif d'alimentation en tension (20) et l'au moins une unité de préparation de signal et/ou de commande (9), à l'état monté de l'antenne radio mobile (1), sont disposés sur l'extrémité de l'antenne radio mobile (1) qui est dirigée le plus près du sol.
